(19) 

Europäisches
Patentamt
European
Patent Office
Office européen
des brevets

(11) **EP 4 442 849 A1**

(12) **EUROPEAN PATENT APPLICATION**
published in accordance with Art. 153(4) EPC

(43) Date of publication:
**09.10.2024 Bulletin 2024/41**

(21) Application number: **22898702.0**

(22) Date of filing: **29.11.2022**

(51) International Patent Classification (IPC):
*C22C 38/00* (2006.01)    *C22C 38/60* (2006.01)
*C21D 1/18* (2006.01)    *C21D 9/00* (2006.01)
*C21D 9/46* (2006.01)

(52) Cooperative Patent Classification (CPC):
**C22C 38/00; C22C 38/60;** C21D 1/18; C21D 9/00;
C21D 9/46

(86) International application number:
**PCT/JP2022/043929**

(87) International publication number:
**WO 2023/095920 (01.06.2023 Gazette 2023/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.11.2021 JP 2021193323**

(71) Applicant: **NIPPON STEEL CORPORATION
Chiyoda-ku
Tokyo 100-8071 (JP)**

(72) Inventors:
• **TABATA, Shinichiro**
**Tokyo 100-8071 (JP)**
• **KUSUMI, Kazuhisa**
**Tokyo 100-8071 (JP)**

(74) Representative: **Vossius & Partner
Patentanwälte Rechtsanwälte mbB
Siebertstrasse 3
81675 München (DE)**

(54) **STEEL MEMBER AND STEEL SHEET**

(57)    This steel member has a predetermined chemical composition, in which, when a 1/4 position of a thickness in a thickness direction from a surface is defined as a 1/4 depth position, a metallographic structure at the 1/4 depth position includes 90% or more of martensite by volume fraction, in the metallographic structure at the 1/4 depth position, L49-56°/L4-12°, which is a ratio of a length L49-56° of grain boundaries having an angle of rotation of 49° to 56° to a length L4-12° of grain boundaries having an angle of rotation of 4° to 12° about a <011> direction as a rotation axis, among grain boundaries of grains having a body-centered structure, is 1.10 or more, and a tensile strength of the steel member is more than 1,500 MPa.

**EP 4 442 849 A1**

**Description**

[Technical Field of the Invention]

The present invention relates to a steel member and a steel sheet.

Priority is claimed on Japanese Patent Application No. 2021-193323, filed November 29, 2021, the content of which is incorporated herein by reference.

[Related Art]

In the field of steel sheets for a vehicle, against the background of tightening of recent environmental regulations and collision safety standards, the application of steel sheets having high tensile strength (high strength steel sheets) has expanded in order to improve both fuel efficiency and collision safety. However, press formability of a steel sheet decreases with high-strengthening, which makes it difficult to manufacture a product having a complex shape.

Specifically, ductility of the steel sheet decreases with the high-strengthening, and there is a problem in that the steel sheet is fractured at a highly processed portion in the case of being processed into a complex shape. In addition, with the high-strengthening of the steel sheet, residual stress after processing causes springback and wall warpage, which also causes a problem that dimensional accuracy is deteriorated. Therefore, it is not easy to perform press forming on a steel sheet having high strength, particularly a tensile strength of 780 MPa or more, into a product having a complex shape. Roll forming rather than press forming makes it easier to process a high strength steel sheet, but the application thereof is limited to components having a uniform cross section in a longitudinal direction thereof.

Therefore, in recent years, for example, as disclosed in Patent Documents 1 to 3, a hot stamping technique has been adopted as a technique of press-forming a material that is difficult to form, such as a high strength steel sheet. The hot stamping technique is a hot forming technique of heating a material to be subjected to forming and then forming the material.

In this technique, the material is formed after being heated. Therefore, the steel is soft at the time of forming and has good formability. Accordingly, even a high strength steel sheet can be accurately formed into a complex shape. Furthermore, in the hot stamping technique, since quenching is performed simultaneously with forming by a press die, steel (steel member) after the forming has sufficient strength.

For example, according to Patent Document 1, it is disclosed that it is possible to impart a tensile strength of 1,400 MPa or more to a steel member obtained by forming a steel sheet through the hot stamping technique.

In recent years, countries around the world have set higher $CO_2$ reduction targets, and each vehicle manufacturer has progressed in reducing fuel consumption in consideration of collision safety. Not only gasoline vehicles but also electric vehicles that the development thereof are under rapid progress require, as its materials, higher strength materials to protect not only passengers but also batteries from collision and to cancel out the amount of an increase in weight. For example, in a steel member used in vehicles and the like, there is a need for a higher strength (higher than 1.5 GPa) steel that exceeds the strength described above in Patent Document 1 or a strength generally used as a steel member currently formed by hot stamping.

However, most of metal materials deteriorate in various properties with high-strengthening and particularly, increase in susceptibility to hydrogen embrittlement. It is known that the susceptibility to hydrogen embrittlement increases when a tensile strength of a steel member is 1.2 GPa or more, and there have been cases of hydrogen embrittlement cracking in bolt steel for which high-strengthening has been progressed ahead of the vehicle field. Therefore, in a hot stamping member having a tensile strength of more than 1.5 GPa, there is a concern that the susceptibility to hydrogen embrittlement further increases.

A steel member used in vehicles has a risk of hydrogen embrittlement cracking due to hydrogen generated during manufacturing and use of the vehicles. During manufacturing, hydrogen is generated in a step of heating a material or in an electrodeposition coating step, and a portion thereof is stored in the steel member. In addition, during use, hydrogen is generated due to corrosion of the steel member. As described above, since the susceptibility to hydrogen embrittlement of the steel extremely increases particularly in a strength range of more than 1.5 GPa, it is considered that even a small amount of hydrogen can cause hydrogen embrittlement. Therefore, in order to apply a hot stamping member having a tensile strength of more than 1.5 GPa to a vehicle body for a further reduction in the weight of the vehicle body, it is necessary to sufficiently reduce the risk of hydrogen embrittlement cracking.

Regarding a high strength steel having a tensile strength of more than 1.5 GPa, for example, Patent Document 2 discloses a press-formed article that has excellent toughness and a tensile strength of 1.8 GPa or more and is hot press-formed. Patent Document 3 discloses a steel having a tensile strength as extremely high as 2.0 GPa or more, and further having good toughness and ductility. Patent Document 4 discloses a steel having a tensile strength as high as 1.8 GPa or more and further having good toughness. Patent Document 5 discloses a steel having a tensile strength as extremely high as 2.0 GPa or more and further having good toughness.

However, there is room for further improvement in these techniques from the viewpoint of hydrogen embrittlement resistance in the manufacturing and use of vehicles as described above.

[Prior Art Document]

[Patent Document]

[Patent Document 1] Japanese Unexamined Patent Application, First Publication No. 2002-102980
[Patent Document 2] Japanese Unexamined Patent Application, First Publication No. 2012-180594
[Patent Document 3] Japanese Unexamined Patent Application, First Publication No. 2012-1802
[Patent Document 4] PCT International Publication No. WO2015/182596
[Patent Document 5] PCT International Publication No. WO2015/182591

[Disclosure of the Invention]

[Problems to be Solved by the Invention]

The present invention has been made to solve the above problems, and an object thereof is to provide a steel member having a high tensile strength and excellent hydrogen embrittlement resistance and a steel sheet suitable as a material of the steel member.

[Means for Solving the Problem]

In order to obtain a steel member having a high tensile strength and excellent hydrogen embrittlement resistance, the present inventors investigated influences of a steel sheet that serves as a material and a metallographic structure on these properties. As a result, the following findings were obtained.
(a) Most of commonly used steel sheets having a tensile strength of about 1.5 GPa (1,500 MPa) after a heat treatment including quenching such as hot stamping contain about 0.20 mass% of C, and strength after the heat treatment is secured due to this C.

In order to achieve a further reduction in the weight of the vehicle body, the present inventors conducted a detailed examination to obtain a steel member having a strength as high as more than 1.5 GPa after a heat treatment by increasing a C content. As a result, it was found that by setting the C content to 0.26 mass% or more, an ultrahigh strength of more than 1.5 GPa in terms of tensile strength can be obtained after a heat treatment including quenching such as hot stamping.
On the other hand, there was a concern about a risk that susceptibility to hydrogen embrittlement increases with ultrahigh-strengthening to a tensile strength of more than 1.5 GPa and hydrogen embrittlement cracking is caused by hydrogen generated in a corrosive environment while a vehicle is in operation.
(b) The present inventors examined a method for improving the hydrogen embrittlement resistance in a high strength steel member having a tensile strength of more than 1.5 GPa. As a result, it was found that the hydrogen embrittlement resistance can be improved by controlling a grain boundary length having a specific angle of rotation.
Based on the above-described findings, the present inventors developed a steel member having a significantly improved hydrogen embrittlement resistance and a tensile strength of more than 1.5 GPa, and a steel sheet that serves as a material thereof.
The gist of the present invention is as follows.

[1] A steel member according to an aspect of the present invention includes, as a chemical composition, by mass%: C: 0.26% to 0.65%; Si: 0% to 2.00%; Mn: 0.05% to 3.00%; P: 0.050% or less; S: 0.0100% or less; N: 0.010% or less; O: 0.010% or less; Nb: 0.01% to 0.10%; Ti: 0.005% to 0.100%; Cu: 0.10% to 2.50%; Ni: 0% to 0.30%; Cr: 0% to 0.50%; B: 0% to 0.0100%; Mo: 0% to 1.00%; V: 0% to 1.00%; Ca: 0% to 0.010%; Mg: 0% to 0.010%; Al: 0% to 1.00%; Sn: 0% to 1.00%; W: 0% to 1.00%; Sb: 0% to 1.00%; Zr: 0% to 1.00%; Se: 0% to 1.00%; Bi: 0% to 1.00%; As: 0% to 1.00%; Ta: 0% to 1.00%; Re: 0% to 1.00%; Os: 0% to 1.00%; Ir: 0% to 1.00%; Tc: 0% to 1.00%; Co: 0% to 1.00%; REM: 0% to 0.30%; and a remainder: Fe and impurities, in which, when a 1/4 position of a thickness in a thickness direction from a surface is defined as a 1/4 depth position, a metallographic structure at the 1/4 depth position includes 90% or more of martensite by volume fraction, in the metallographic structure at the 1/4 depth position, L49-56°/L4-12°, which is a ratio of a length L49-56° of grain boundaries having an angle of rotation of 49° to 56° to a length L4-12° of grain boundaries having an angle of rotation of 4° to 12° about a <011> direction as a rotation axis, among grain boundaries of grains having a body-centered structure, is 1.10 or more, and a tensile strength of the steel member is more than 1,500 MPa.

[2] In the steel member according to [1], in the chemical composition, by mass%, when a Ni content is denoted by [Ni], a Cu content is denoted by [Cu], a Nb content is denoted by [Nb], a Ti content is denoted by [Ti], and a N content is denoted by [N], [Ni]/[Cu] < 0.50, when [Nb] = 0.01 or more and less than 0.03, [Ti] = 3 × [N] + 0.010 to 3 × [N] + 0.020, when [Nb] = 0.03 or more and less than 0.05, [Ti] = 5 × [N] + 0.010 to 5 × [N] + 0.020, and when [Nb] = 0.05 to 0.10, [Ti] = 7 × [N] + 0.010 to 7 × [N] 0.020, and NbTi(C,N) may be contained in the metallographic structure at the 1/4 depth position, and a size of the NbTi(C,N) may be 20 μm or less.

[3] In the steel member according to [1] or [2], a coating may be provided on the surface.

[4] In the steel member according to [3], the coating may primarily contain an Fe-Al-based alloy.

[5] In the steel member according to [3], the coating may primarily contain an Fe-Zn-based alloy.

[6] A steel sheet according to another aspect of the present invention includes, as a chemical composition, by mass%: C: 0.26% to 0.65%; Si: 0% to 2.00%; Mn: 0.05% to 3.00%; P: 0.050% or less; S: 0.0100% or less; N: 0.010% or less; O: 0.010% or less; Nb: 0.01% to 0.10%; Ti: 0.005% to 0.100%; Cu: 0.10% to 2.50%; Ni: 0% to 0.30%; Cr: 0% to 0.50%; B: 0% to 0.0100%; Mo: 0% to 1.00%; V: 0% to 1.00%; Ca: 0% to 0.010%; Mg: 0% to 0.010%; Al: 0% to 1.00%; Sn: 0% to 1.00%; W: 0% to 1.00%; Sb: 0% to 1.00%; Zr: 0% to 1.00%; Se: 0% to 1.00%; Bi: 0% to 1.00%; As: 0% to 1.00%; Ta: 0% to 1.00%; Re: 0% to 1.00%; Os: 0% to 1.00%; Ir: 0% to 1.00%; Tc: 0% to 1.00%; Co: 0% to 1.00%; REM: 0% to 0.30%; and a remainder: Fe and Impurities, in which, in a metallographic structure at a 1/4 depth position, which is a 1/4 position of a sheet thickness in a sheet thickness direction from a surface, a volume fraction of a region that is surrounded by boundaries having a crystal orientation difference of 5° or more and has an average crystal orientation difference of 0.4° or more and 3.0° or less inside the boundaries is 85% or less, and in the metallographic structure at the 1/4 depth position, a volume fraction of retained austenite is 5% or less.

[7] In the steel sheet according to [6], in the metallographic structure, the volume fraction of the region that is surrounded by the boundaries having a crystal orientation difference of 5° or more and has an average crystal orientation difference of 0.4° or more and 3.0° or less inside the boundaries may be 10% or less.

[8] In the steel sheet according to [6] or [7], a coating may be provided on the surface.

[9] In the steel sheet according to [8], the coating may be an Al-based coating.

[10] In the steel sheet according to [8], the coating may be a Zn-based coating.

[Effects of the Invention]

According to the above-described aspects of the present invention, it is possible to provide a steel member having a high tensile strength and excellent hydrogen embrittlement resistance, and a steel sheet suitable as a material thereof. Such a steel member has a high strength and a low risk of hydrogen embrittlement and thus can be applied to vehicle bodies more safely.

[Embodiments of the Invention]

(A) Steel Member

A steel member according to an embodiment of the present invention (a steel member according to the present embodiment) has a predetermined chemical composition, in which, when a 1/4 position of a thickness in a thickness direction from a surface is defined as a 1/4 depth position, a metallographic structure at the 1/4 depth position includes 90% or more of martensite by volume fraction, in the metallographic structure at the 1/4 depth position, L49-56°/L4-12°, which is a ratio of a length L49-56° of grain boundaries having an angle of rotation of 49° to 56° to a length L4-12° of grain boundaries having an angle of rotation of 4° to 12° about a <011> direction as a rotation axis, among grain boundaries of grains having a body-centered structure, is 1.10 or more, and a tensile strength of the steel member is more than 1,500 MPa (1.5 GPa).

In the steel member, the surface may have a coating.

Hereinafter, each requirement will be described in detail.

(A1) Chemical Composition

The steel member according to the present embodiment has a predetermined chemical composition. Specifically, the chemical composition of the steel member includes, by mass%, C: 0.26% to 0.65%; Si: 0% to 2.00%; Mn:

0.05% to 3.00%; P: 0.050% or less; S: 0.0100% or less; N: 0.010% or less; O: 0.010% or less; Nb: 0.01% to 0.10%; Ti: 0.005% to 0.100%; Cu: 0.10% to 2.50%; Ni: 0% to 0.30%; Cr: 0% to 0.50%; B: 0% to 0.0100%; Mo: 0% to 1.00%; V: 0% to 1.00%; Ca: 0% to 0.010%; Mg: 0% to 0.010%; Al: 0% to 1.00%; Sn: 0% to 1.00%; W: 0% to 1.00%; Sb: 0% to 1.00%; Zr: 0% to 1.00%; Se: 0% to 1.00%; Bi: 0% to 1.00%; As: 0% to 1.00%; Ta: 0% to 1.00%; Re: 0% to 1.00%; Os: 0% to 1.00%; Ir: 0% to 1.00%; Tc: 0% to 1.00%; Co: 0% to 1.00%; REM: 0% to 0.30%; and a remainder: Fe and impurities.

Here, the chemical composition of the steel member refers to a chemical composition of a portion excluding the vicinity of the surface (for example, the 1/4 position of the thickness in the thickness direction from the surface of the steel member: the 1/4 depth position). Hereinafter, % regarding the content is mass% unless otherwise specified.

The reasons for limiting the amount of each element are as follows.

C: 0.26% to 0.65%

C is an element that enhances hardenability of steel and improves strength of the steel member that is obtained after subjecting a steel sheet to quenching such as hot stamping. When a C content is less than 0.26%, it becomes difficult to secure sufficient strength (more than 1.5 GPa (1,500 MPa)) in the steel member after quenching (a steel member obtained by quenching). Therefore, the C content is set to 0.26% or more. The C content is set to preferably 0.28% or more, and more preferably 0.32% or more.

On the other hand, when the C content is more than 0.65%, the strength of the steel member after quenching becomes excessively high, and a decrease in hydrogen embrittlement resistance becomes significant. Therefore, the C content is set to 0.65% or less. The C content is preferably set to 0.60% or less.

Si: 0% to 2.00%

Si does not have to be contained (may be 0%), but is an effective element for enhancing the hardenability of the steel and stably securing the strength of the steel member after quenching. Therefore, Si may be contained. In a case of obtaining the above effect, a Si content is set to preferably 0.10% or more, and more preferably 0.35% or more.

On the other hand, when the Si content in steel is more than 2.00%, a heating temperature required for austenitic transformation becomes significantly high during the heat treatment (quenching). Accordingly, there are cases where the cost required for the heat treatment increases, or ferrite remains during heating, resulting in a decrease in the strength of the steel member. Therefore, the Si content is set to 2.00% or less. The Si content is preferably set to 1.50% or less.

Mn: 0.05% to 3.00%

Mn is a very effective element for enhancing the hardenability of the steel and stably securing the strength after quenching. Mn is an element that further lowers an Ac3 point and promotes lowering of a quenching treatment temperature. However, when a Mn content is less than 0.05%, the effect is not sufficient. Therefore, the Mn content is set to 0.05% or more. The Mn content is preferably set to 0.15% or more.

On the other hand, when the Mn content is more than 3.00%, the hydrogen embrittlement resistance of the steel member after quenching deteriorates. Therefore, the Mn content is set to 3.00% or less. The Mn content is set to preferably 2.50% or less. and more preferably 1.50% or less.

P: 0.050% or Less

P is an element that decreases the hydrogen embrittlement resistance of the steel member after quenching. In particular, when a P content is more than 0.050%, the decrease in the hydrogen embrittlement resistance becomes significant. Therefore, the P content is limited to 0.050% or less. The P content is preferably limited to 0.020% or less.

Since the P content is preferably as small as possible, the P content may be 0%. However, from the viewpoint of cost, the P content may be set to 0.001% or more.

S: 0.0100% or Less

S is an element that decreases the hydrogen embrittlement resistance of the steel member after quenching. In particular, when a S content is more than 0.0100%, the decrease in the hydrogen embrittlement resistance becomes significant. Therefore, the S content is limited to 0.0100% or less. The S content is preferably limited to 0.0050% or less. Since the S content is preferably as small as possible, the S content may be 0%. However, from the viewpoint of cost, the S content may be set to 0.0001% or more.

N: 0.010% or Less

N is an element that decreases the hydrogen embrittlement resistance of the steel member after quenching. In particular, when a N content is more than 0.010%, coarse nitrides are formed in steel, and the hydrogen embrittlement resistance significantly decreases. Therefore, the N content is set to 0.010% or less. A lower limit of the N content does not need to be particularly limited and may be 0%. However, setting the N content to less than 0.0002% leads to an increase in steelmaking cost and is economically undesirable. Therefore, the N content may be set to 0.0002% or more, 0.0008% or more or 0.001% or more.

O: 0.010% or Less

O is an element that decreases the hydrogen embrittlement resistance of the steel member after quenching. In particular, when an O content is more than 0.010%, coarse oxides are formed in steel, and the hydrogen embrittlement resistance significantly decreases. Therefore, the O content is set to 0.010% or less. A lower limit of the O content does not need to be particularly limited and may be 0%. However, setting the O content to less than 0.0002% leads to an increase in steelmaking cost and is economically undesirable. Therefore, the O content may be set to 0.0002% or more, 0.0008% or more, or 0.001% or more.

Nb: 0.01% to 0.10%

Nb is an element that forms fine carbonitrides in steel, suppresses Cu hot embrittlement cracking in a hot rolling step through a refining effect of the carbonitrides, and has an action of improving the hydrogen embrittlement resistance of the steel member. In order to obtain the above effect, a Nb content is set to 0.01% or more. The Nb content is preferably set to 0.02% or more.
On the other hand, when the Nb content is more than 0.10%, the carbonitride becomes coarse and bending straightening cracking in a continuous casting step is promoted. In addition, solute Nb inhibits the development of grain boundaries having a specific angle of rotation in the steel member, which will be described later, resulting in a decrease in the hydrogen embrittlement resistance of the steel member. Therefore, the Nb content is set to 0.10% or less. The Nb content is preferably 0.08% or less.

Ti: 0.005% to 0.100%

Ti is an element that forms fine carbonitrides together with Nb in steel, suppresses Cu hot embrittlement cracking in the hot rolling step through a refining effect of the carbonitrides, and has an action of improving the hydrogen embrittlement resistance of the steel member. In addition, Ti is an element that also forms nitrides by being preferentially bonded to N in the steel, suppresses the consumption of solute B due to precipitation of BN, and promotes an effect of improving the hardenability by B, which will be described later. In order to obtain the above effect, a Ti content is set to 0.005% or more. The Ti content is set to preferably 0.010% or more, and more preferably 0.015% or more.
On the other hand, when the Ti content is more than 0.100%, the carbonitrides become coarse and bending straightening cracking in the continuous casting step is promoted. In addition, solute Ti inhibits the development of grain boundaries having a specific angle of rotation in the steel member, which will be described later, resulting in a decrease in the hydrogen embrittlement resistance of the steel member. In addition to the carbonitrides with Nb and TiN, the amount of TiC precipitated increases and C is consumed, so that the strength of the steel member after quenching decreases. Therefore, the Ti content is set to 0.100% or less. The Ti content is preferably set to 0.080% or less.

Cu: 0.10% to 2.50%

Cu is an element that develops grain boundaries having a specific angle of rotation and improves the hydrogen embrittlement resistance of the steel member. Cu is an effective element for enhancing the hardenability of the steel and stably securing the strength of the steel member after quenching. In addition, Cu is an element that improves corrosion resistance in a corrosive environment. In order to obtain these effects, a Cu content is set to 0.10% or more. The Cu content is preferably set to 0.20% or more.
On the other hand, when the Cu content is more than 2.50%, the above effects are saturated and the cost increases. Therefore, the Cu content is set to 2.50% or less. The Cu content is set to preferably 1.50% or less, and more preferably 1.00% or less.
In the chemical composition of the steel member according to the present embodiment, elements other than the above-described elements, that is, the remainder may include Fe and impurities. In order to improve various properties (hardenability, strength, hydrogen embrittlement resistance, deoxidation properties, corrosion resistance, and the like) of the steel member and components including the steel member, one or more elements selected from the group consisting of Ni, Cr, B, Mo, V, Ca, Mg, Al, Sn, W, Sb, Zr, Se, Bi, As, Ta, Re, Os, Ir, Tc, Co, and REM may be further contained within ranges described below. These elements are optional elements and do not necessarily have to be contained. Therefore, lower limits thereof are 0%. These elements may be contained as impurities as long as amounts of the elements are equal to or less than upper limits described below.

Ni: 0% to 0.30%

Ni is an effective element for enhancing the hardenability of the steel and stably securing the strength of the steel member after quenching. In addition, Ni is an element having an action of suppressing Cu hot embrittlement cracking in the manufacturing of a steel sheet. Therefore, Ni may be contained. In order to obtain the above effects, a Ni content is set to preferably 0.06% or more, more preferably 0.10% or more, and even more preferably 0.20% or more. The Ni content may be set according to the Cu content.

On the other hand, when the Ni content is more than 0.30%, the development of specific grain boundaries described later is inhibited, and a limit hydrogen amount of the steel member decreases. In addition, Ni generates fume that is harmful to the human body in a case where laser cutting or welding is performed in a steel member manufacturing step. Therefore, in a case of containing Ni, the Ni content is set to 0.30% or less. The Ni content is set to preferably 0.20% or less, more preferably 0.15% or less, and even more preferably 0.10% or less.

Cr: 0% to 0.50%

Cr is an effective element for enhancing the hardenability of the steel and stably securing the strength of the steel member after quenching. Therefore, Cr may be contained. In a case of obtaining the above effect, a Cr content is set to preferably 0.03% or more, and more preferably 0.05% or more.

On the other hand, when the Cr content is more than 0.50%, the above effect is saturated and the cost increases. Furthermore, since Cr has an action of stabilizing iron carbides, when the Cr content is more than 0.50%, there are cases where coarse iron carbides remain undissolved during the heat treatment of the steel sheet, and the hydrogen embrittlement resistance of the steel member decreases. In addition, Cr generates fume that is harmful to the human body in a case where laser cutting or welding is performed in the steel member manufacturing step. Therefore, the Cr content is set to 0.50% or less. The Cr content is set to preferably 0.25% or less, more preferably 0.20% or less, and even more preferably 0.15% or less.

B: 0% to 0.0100%

B is an element having an action of enhancing the hardenability of the steel even in a small amount. In addition, B is an element that strengthens grain boundaries and improves the hydrogen embrittlement resistance by being segregated at the grain boundaries, and is an element that suppresses the growth of austenite grains when the steel sheet is heated. Therefore, B may be contained. In a case of obtaining the above effect, a B content is set to preferably 0.0005% or more, and more preferably 0.0010% or more.

On the other hand, when the B content is more than 0.0100%, a large amount of coarse compounds are precipitated, and the hydrogen embrittlement resistance of the steel member decreases. Therefore, in a case where B is contained, the B content is set to 0.0100% or less. The B content is preferably set to be 0.0080% or less.

Mo: 0% to 1.00%

Mo is a very effective element for enhancing the hardenability of the steel and stably securing the strength of the steel member after quenching. In particular, a synergistic effect on the improvement in the hardenability can be obtained by including a compound of Mo and B. Therefore, Mo may be contained. In a case of obtaining the above effect, a Mo content is set to preferably 0.10% or more, and more preferably 0.20% or more.

On the other hand, Mo is an element having an action of stabilizing iron carbides. When the Mo content is more than 1.00%, there are cases where coarse iron carbides remain undissolved when the steel sheet is heated, and the hydrogen embrittlement resistance of the steel member after quenching decreases. In addition, the cost increase is significant. Therefore, in a case where Mo is contained, the Mo content is set to 1.00% or less. The Mo content is preferably set to 0.80% or less.

V: 0% to 1.00%

V is an element that forms fine carbides in steel and improves the hydrogen embrittlement resistance of the steel member through a refining effect or hydrogen trapping effect of carbides thereof. Therefore, V may be contained. In a case of obtaining the above effect, a V content is set to preferably 0.01% or more, and more preferably 0.10% or more.

On the other hand, when the V content is more than 1.00%, the above effect is saturated and the economic efficiency is lowered. Therefore, in a case where V is contained, the V content is set to 1.00% or less.

Ca: 0% to 0.010%

Ca is an element having an effect of refining inclusions in steel and enhancing the hydrogen embrittlement resistance of the steel member after quenching. Therefore, Ca may be contained. In a case of obtaining the above effect, a Ca content is set to preferably 0.001% or more, and more preferably 0.002% or more.

On the other hand, when the Ca content is more than 0.010%, the effect is saturated and the cost increases. Therefore, in a case where Ca is contained, the Ca content is set to 0.010% or less. The Ca content is set to preferably 0.005% or less, and more preferably 0.004% or less.

Mg: 0% to 0.010%

Mg is an element having an effect of refining inclusions in steel and enhancing the hydrogen embrittlement resistance after the heat treatment. Therefore, Mg may be contained. In a case of obtaining the above effect, a Mg content is preferably set to 0.001% or more. The Mg content is more preferably 0.002% or more.

On the other hand, when the Mg content is more than 0.010%, the effect is saturated and the cost increases. Therefore, in a case where Mg is contained, the Mg content is set to 0.010% or less. The Mg content is preferably 0.005% or less, and more preferably 0.004% or less.

Al: 0% to 1.00%

Al is an element generally used as a steel deoxidizing agent. Therefore, Al may be contained. In order to obtain the above effect, an Al content is preferably set to 0.01% or more.

On the other hand, when the Al content is more than 1.00%, the above effect is saturated and the economic efficiency is lowered. Therefore, in a case where Al is contained, the Al content is set to 1.00% or less.

Sn: 0% to 1.00%

Sn is an element that improves corrosion resistance in a corrosive environment. Therefore, Sn is preferably contained. When a Sn content is less than 0.01%, these effects are not sufficient. Therefore, in a case where Sn is contained, the Sn content is preferably set to 0.01% or more. The Sn content is set to more preferably 0.03% or more, and even more preferably 0.05% or more.

On the other hand, when the Sn content is more than 1.00%, a grain boundary strength decreases, and the hydrogen embrittlement resistance of the steel member after quenching decreases. Therefore, in a case where Sn is contained, the Sn content is set to 1.00% or less.

W: 0% to 1.00%

W is an effective element for enhancing the hardenability of steel and stably securing the strength of the steel member after quenching. Therefore, W may be contained. In addition, W is an element that improves corrosion resistance in a corrosive environment. In a case of obtaining the above effects, a W content is preferably set to 0.01% or more. The W content is set to more preferably 0.05% or more, and even more preferably 0.10% or more.

On the other hand, when the W content is more than 1.00%, the above effects are saturated and the economic efficiency is lowered. Therefore, in a case where W is contained, the W content is set to 1.00% or less.

Sb: 0% to 1.00%

Sb is an element that improves corrosion resistance in a corrosive environment. Therefore, Sb may be contained. In a case of obtaining the above effect, a Sb content is preferably set to 0.01% or more.

On the other hand, when the Sb content is more than 1.00%, the grain boundary strength decreases, and the hydrogen embrittlement resistance of the steel member after quenching decreases. Therefore, in a case where Sb is contained, the Sb content is set to 1.00% or less.

Zr: 0% to 1.00%

Zr is an element that improves corrosion resistance in a corrosive environment. Therefore, Zr may be contained. In a case of obtaining the above effect, a Zr content is preferably set to 0.01% or more.

On the other hand, when the Zr content is more than 1.00%, the grain boundary strength decreases, and the hydrogen embrittlement resistance of the steel member after quenching decreases. Therefore, in a case where Zr is contained, the Zr content is set to 1.00% or less.

Se: 0% to 1.00%

Se is an element that improves the hydrogen embrittlement resistance. Therefore, Se may be contained. In a case of obtaining the above effect, a Se content is preferably set to 0.01% or more.

On the other hand, when the Se content is more than 1.00%, the effect is saturated and the cost increases. Therefore, in a case where Se is contained, the Se content is set to 1.00% or less.

Bi: 0% to 1.00%

Bi is an element that improves the hydrogen embrittlement resistance. Therefore, Bi may be contained. In a case of obtaining the above effect, a Bi content is preferably set to 0.01% or more.

On the other hand, when the Bi content is more than 1.00%, the effect is saturated and the cost increases. Therefore, in a case where Bi is contained, the Bi content is set to 1.00% or less.

As: 0% to 1.00%

As is an element that improves the hydrogen embrittlement resistance. Therefore, As may be contained. In a case of obtaining the above effect, an As content is preferably set to 0.01% or more.

On the other hand, when the As content is more than 1.00%, the effect is saturated and the cost increases. Therefore, in a case where As is contained, the As content is set to 1.00% or less.

Ta: 0% to 1.00%

Ta is an element that improves the hydrogen embrittlement resistance. Therefore, Ta may be contained. In a case of obtaining the above effect, a Ta content is preferably set to 0.01% or more.

On the other hand, when the Ta content is more than 1.00%, the effect is saturated and the cost increases. Therefore, in a case where Ta is contained, the Ta content is set to 1.00% or less.

Re: 0% to 1.00%

Re is an element that improves the hydrogen embrittlement resistance. Therefore, Re may be contained. In a case of obtaining the above effect, a Re content is preferably set to 0.01% or more.

On the other hand, when the Re content is more than 1.00%, the effect is saturated and the cost increases. Therefore, in a case where Re is contained, the Re content is set to 1.00% or less.

Os: 0% to 1.00%

Os is an element that improves the hydrogen embrittlement resistance. Therefore, Os may be contained. In a case of obtaining the above effect, an Os content is preferably set to 0.01% or more.

On the other hand, when the Os content is more than 1.00%, the effect is saturated and the cost increases. Therefore, in a case where Os is contained, the Os content is set to 1.00% or less.

Ir: 0% to 1.00%

Ir is an element that improves the hydrogen embrittlement resistance. Therefore, Ir may be contained. In a case of obtaining the above effect, an Ir content is preferably set to 0.01% or more.

On the other hand, when the Ir content is more than 1.00%, the effect is saturated and the cost increases. Therefore, in a case where Ir is contained, the Ir content is set to 1.00% or less.

Tc: 0% to 1.00%

Tc is an element that improves the hydrogen embrittlement resistance. Therefore, Tc may be contained. In a case of obtaining the above effect, a Tc content is preferably set to 0.01% or more.
On the other hand, when the Tc content is more than 1.00%, the effect is saturated and the cost increases. Therefore, in a case where Tc is contained, the Tc content is set to 1.00% or less.

Co: 0% to 1.00%

Co is an element that improves corrosion resistance in a corrosive environment. Therefore, Co may be contained. In a case of obtaining the above effect, a Co content is preferably set to 0.01% or more.
On the other hand, when the Co content is more than 1.00%, the above effect is saturated and the economic efficiency is lowered. Therefore, in a case where Co is contained, the Co content is set to 1.00% or less.

REM: 0% to 0.30%

Similar to Ca, REM is an element having an effect of refining inclusions in steel and improving the hydrogen embrittlement resistance of the steel member after quenching. Therefore, REM may be contained. In a case of obtaining the above effect, the REM content is set to preferably 0.01% or more, and more preferably 0.02% or more.
On the other hand, when the REM content is more than 0.30%, the effect is saturated and the cost increases. Therefore, in a case where REM is contained, the REM content is set to 0.30% or less. The REM content is preferably set to 0.20% or less.
Here, REM refers to a total of 17 elements including Sc, Y, and lanthanoids such as La, Ce, and Nd, and the REM content means the total amount of these elements. REM is added to molten steel using, for example, an Fe-Si-REM alloy, and this alloy contains, for example, Sc, Y, La, Ce, Pr, and Nd.
In the chemical composition of the steel member of the present embodiment, elements other than the above-described elements, that is, the remainder include Fe and impurities.
Here, the "impurities" are elements that are incorporated due to various factors including raw materials such as ore and scrap and a manufacturing step when the steel sheet is industrially manufactured, and are acceptable in a range without adversely affecting the properties of the steel member according to the present embodiment. An industrial manufacturing method is a blast furnace steelmaking method or an electric furnace steelmaking method, and includes a level (impurity level) incorporated during manufacturing by any of the methods.
The chemical composition of the steel member can be obtained by the following method.
The chemical composition can be obtained by performing elemental analysis on the 1/4 depth position of the steel member (a range of 1/8 to 3/8 of the thickness from the surface in the thickness direction is allowed) using a general method such as ICP-AES. C and S may be measured using a combustion-infrared absorption method, N may be measured using an inert gas fusion-thermal conductivity method, and O may be measured using an inert gas fusion-non-dispersive infrared absorption method.
Here, a surface that serves as a reference for the 1/4 depth position is the surface of the steel member. However, in a case where the surface has a coating (a case where the steel member has a steel substrate and a coating formed on a surface of the steel substrate), the surface is the surface of the steel substrate excluding the coating. Therefore, in a case where the steel member has the steel substrate and the coating formed on the surface of the steel substrate, the chemical composition of the steel member indicates a chemical composition of the steel substrate. This also applies to the 1/4 depth position that specifies the metallographic structure.
In the steel member according to the present embodiment, in order to obtain grain boundaries having a specific angle of rotation, which will be described later, while the amount of each element satisfies the above range, it is preferable that, when the Ni content is denoted by [Ni] and the Cu content is denoted by [Cu], by mass%, [Ni]/[Cu] < 0.50 is satisfied.
[Ni]/[Cu] is set to more preferably 0.30 or less, even more preferably 0.20 or less, and still more preferably 0.15 or less.
On the other hand, from the viewpoint of suppressing hot brittle cracking caused by Cu, [Ni]/[Cu] is preferably 0.01 or more, more preferably 0.03 or more, and even more preferably 0.05 or more.
In the steel member according to the present embodiment, when the Nb content is denoted by [Nb], the Ti content is denoted by [Ti], and the N content is denoted by [N], by mass%, it is preferable that the Ti content and the N content satisfy a predetermined relationship depending on the Nb content as described below.
When [Nb] = 0.01 or more and less than 0.03,

$$[Ti] = 3 \times [N] + 0.010 \text{ to } 3 \times [N] + 0.020 \text{ (which means } 3 \times [N] + 0.010 \leq [Ti] \leq 3 \times [N] + 0.020)$$

When [Nb] = 0.03 or more and less than 0.05, [Ti] = 5 × [N] + 0.010 to 5 × [N] + 0.020 (which means 5 × [N] + 0.010 ≤ [Ti] ≤ 5 × [N] + 0.020)

When [Nb] = 0.05 to 0.10, [Ti] = 7 × [N] + 0.010 to 7 × [N] + 0.020 (which means 7 × [N] + 0.010 ≤ [Ti] ≤ 7 × [N] + 0.020)

By satisfying the above relationship, Nb and Ti that are contained in the steel member are finely precipitated without excess or deficiency, and free Nb and free Ti decrease in amount. Through the refinement of carbonitrides, bending straightening cracking in the continuous casting step can be suppressed. In addition, the finely precipitated carbonitrides suppress Cu embrittlement cracking in the hot rolling step, which will be described later, through the refining effect. In addition, as free Nb and free Ti decrease in amount, it becomes easier to form grain boundaries having a specific angle of rotation, which will be described later.

(A2) Metallographic Structure of Steel Member

The metallographic structure at the 1/4 depth position of the steel member according to the present embodiment is a structure containing 90% or more of martensite by volume fraction. When the above-described chemical composition is provided and the volume fraction of martensite is 90% or more, a tensile strength of more than 1.5 GPa can be obtained. Preferably, martensite occupies 95% or more by volume fraction. More preferably, martensite occupies 97% or more. The volume fraction of martensite may be 100%. When the volume fraction of martensite is small, it becomes difficult to obtain a tensile strength of more than 1.5 GPa.

The metallographic structure at the 1/4 depth position of the steel member may contain retained austenite, bainite, ferrite, and/or pearlite as the remainder other than martensite.

Martensite includes not only fresh martensite but also tempered martensite and auto-tempered martensite. The auto-tempered martensite is tempered martensite generated during cooling at the time of quenching without a heat treatment for tempering, and is generated by in-situ tempering of martensite generated due to self-heating associated with martensitic transformation.

Microstructural fractions in the metallographic structure of the steel member can be measured by the following method.

An area fraction of martensite (including tempered martensite and auto-tempered martensite) is measured by a transmission electron microscope (TEM) and an electron beam diffractometer attached to the TEM.

Specifically, a measurement sample including a 1/4 position of a width (1/4 width position) of the steel member from an end portion of the steel member in a width direction and the 1/4 depth position of the steel member in a cross section in a direction perpendicular to a rolling direction is cut out, and is used as a thin film sample for TEM observation. In this thin film sample, a range of 400 $\mu$m$^2$ or more including the 1/4 width position and the 1/4 depth position is observed with the TEM.

Martensite and bainite, which have body-centered cubic lattices, and retained austenite, which has face-centered cubic lattices are distinguished from an electron beam diffraction pattern of the thin film sample. Then, iron carbides (Fe$_3$C) in martensite and bainite are found by the diffraction pattern, and a precipitation morphology thereof is observed to measure the microstructural fraction of each of martensite and bainite. Specifically, regarding the precipitation morphology, precipitation in three directions is determined to be martensite (tempered martensite), and precipitation limited to one direction is determined to be bainite. A case where precipitation of iron carbide is not observed is also determined to be martensite (fresh martensite).

The microstructural fractions of martensite and bainite measured by the TEM are measured in area fraction (area%). However, since the metallographic structure of the steel member according to the present embodiment has isotropy, values of area fractions can be directly replaced into volume fractions. Carbides are observed to distinguish between martensite and bainite, but in the present embodiment, carbides are not included in the volume fraction of the structure.

Ferrite or pearlite that may be present as the remainder in microstructure can be easily confirmed with an optical microscope or a scanning electron microscope. Specifically, a measurement sample including the 1/4 width position of the steel member and the 1/4 depth position of the steel member in the cross section in the direction perpendicular to the rolling direction is cut out and used as a sample for observation. The cut sample is mechanically polished and subsequently mirror-finished. Next, etching is performed on the sample with a nital etching solution to reveal ferrite and pearlite, and a range of 40,000 $\mu m^2$ or more by area is observed using a scanning electron microscope to confirm the presence of ferrite or pearlite. A structure in which ferrite and cementite are alternately arranged in layers is determined to be pearlite, and a structure in which cementite is precipitated in particles is determined to be bainite.

In the steel member according to the present embodiment, in the metallographic structure at the 1/4 depth position, L49-56°/L4-12°, which is the ratio of the length L49-56° of the grain boundaries having an angle of rotation of 49° to 56° to the length L4-12° of the grain boundaries having an angle of rotation of 4° to 12° about the <011> direction as the rotation axis, among the grain boundaries of the grains having a body-centered structure, is 1.10 or more. L49-56°/L4-12° is preferably 1.20 or more, and more preferably 1.30 or more. An upper limit of L49-56°/L4-12° is not limited, but since L49-56°/L4-12° rarely exceeds 3.00, the upper limit may be set to 3.00.

In the metallographic structure primarily containing martensite, the grain boundaries of the grains having a body-centered structure mainly include one or two or more of grain boundaries having an angle of rotation of 4° to 12°, grain boundaries having an angle of rotation of 49° to 56°, grain boundaries having an angle of rotation of 57° to 63°, and grain boundaries having an angle of rotation of 64° to 72°.

Of these, the grain boundaries having an angle of rotation of 49° to 56° are the most effective in suppressing initiation and propagation of ductile cracking regarding hydrogen-mediated ductile fracture behavior, which is a fracture behavior of hydrogen embrittlement cracking. On the other hand, the grain boundaries having an angle of rotation of 4° to 12° are the least effective.

Therefore, in the steel member according to the present embodiment, in the metallographic structure at the 1/4 depth position, the length L49-56° of the grain boundaries having an angle of rotation of 49° to 56° is increased compared to the length L4-12° of the grain boundaries having an angle of rotation of 4° to 12° about the <011> direction as the rotation axis, thereby improving the hydrogen embrittlement resistance.

When L49-56°/L4-12° is less than 1.10, the effect of improving the hydrogen embrittlement resistance is not sufficient.

At the grain boundaries having an angle of rotation of 57° to 63° and the grain boundaries having an angle of rotation of 64° to 72° about the <011> direction as the rotation axis, crack propagation resistance is high, but hydrogen is likely to accumulate and cracks are likely to occur. Therefore, the grain boundaries contribute little to the improvement in the hydrogen embrittlement resistance. Therefore, in the present embodiment, the lengths thereof are not limited.

A grain boundary having an angle of rotation of A° to B° about the <011> direction as the rotation axis refers to a grain boundary between grains adjacent to each other at which the grain boundaries are in an overlapping relationship when rotated by A° to B° about the <011> direction as the rotation axis.

L49-56°/L4-12°, which is the ratio of the length L49-56° of the grain boundaries having an angle of rotation of 49° to 56° about the <011> direction of the grains having a body-centered structure in the metallographic structure (internal structure) at the 1/4 depth position of the steel member as the rotation axis to the length L4-12° of the grain boundaries having an angle of rotation of 4° to 12°, can be measured by the following method.

A sample is cut out from a position 50 mm or more away from the end portion of the steel member so that a cross section perpendicular to the surface (sheet thickness cross section) can be observed. A length of the sample depends on a measuring apparatus, but may be set so that a length of about 10 mm can be observed in the rolling direction. In the cut sample, a measurement region of 50 $\mu m \times$ 50 $\mu m$ centered on the 1/4 position of the thickness (1/4 depth position) in the thickness direction from the surface of the steel member is subjected to electron back scattering diffraction (EBSD) analysis with a measurement interval of 0.1 $\mu m$ to obtain crystal orientation information. Here, the EBSD analysis is performed using, for example, an apparatus including a thermal field-emission scanning electron microscope (JSM-7001F manufactured by JEOL Ltd.) and an EBSD detector (DVC5 type detector manufactured by TSL solutions) at an analysis speed of 200 to 300 points/second. A scanning electron microscope and an EBSD detector having performance equal to or higher than those described above may be used, but an apparatus manufactured by JEOL Ltd. and TSL solutions is desirable.

Next, for the obtained crystal orientation information, among the grain boundaries of the grains having a body-centered structure, proportions of the length of the grain boundaries having an angle of rotation of 49° to 56° and the length of the grain boundaries having an angle of rotation of 4° to 12°, about the <011> direction as the rotation axis are calculated, and L49-56°/L4-12°, which is the ratio of the length of the grain boundaries having an angle of rotation of 49° to 56° to the length of the grain boundaries having an angle of rotation of 4° to 12° about the <011> direction of the grains having a body-centered structure as the rotation axis, is obtained.

The length of the grain boundaries can be easily calculated by using, for example, the "Inverse Pole Figure Map" function and the "Axis Angle" function provided in the software "OIM Analysis (registered trademark)" included in the EBSD analysis apparatus. In these functions, for the grain boundaries of the grains having a body-centered structure, the total length of the grain boundaries can be calculated by designating a specific angle of rotation about any direction as the rotation axis. The above analysis may be performed on all of the grains included in the measurement region, and the lengths of the above-described two kinds of grain boundaries about the <011> direction as the rotation axis may be calculated. Measurement is performed in five visual fields, and an average value of L49-56°/L4-12° of each visual field is set as L49-56°/L4-12° in the present embodiment. As grain boundaries other than the above-described grain boundaries, the lengths of the grain boundaries having an angle of rotation of 57° to 63° and an angle of rotation of 64° to 72° can also be calculated.

In addition, in the steel member according to the present embodiment, it is preferable that NbTi(C,N) (a carbonitride of Nb and Ti) is contained in the metallographic structure at the 1/4 depth position, and a size of NbTi(C,N) is 20 $\mu$m or less.

By including fine carbonitrides, bending straightening cracking in the continuous casting step is suppressed. In addition, the finely precipitated carbonitrides suppress Cu embrittlement cracking in the hot rolling step, which will be described later, through the refining effect. In addition, the finely precipitated carbonitrides improve the hydrogen embrittlement resistance.

The size of NbTi(C,N) is preferably 10 $\mu$m or less, and more preferably 8 $\mu$m or less.

NbTi(C,N) can be measured by the following method.

The size of NbTi(C,N) is measured with a scanning electron microscope. Specifically, a measurement sample including the 1/4 position of the width (1/4 width position) from the end portion in the width direction and the 1/4 depth position of the steel member in the cross section in the direction perpendicular to the rolling direction of the steel member is cut out, and is used as a sample for observation. The cut sample is mechanically polished and subsequently mirror-finished. Next, NbTi(C,N) having a bright contrast is observed in a reflected electron image using the scanning electron microscope. The size of NbTi(C,N) is measured by a maximum Feret diameter. 10 visual fields are measured, and an average value of Feret diameters of NbTi(C,N) having the maximum Feret diameter in each visual field is defined as the size of NbTi(C,N).

(A3) Surface of Steel Member

The steel member according to the present embodiment may have a coating on a part or the entirety of the surface.

The coating may be a coating primarily containing an Fe-Al-based alloy or a coating primarily containing an Fe-Zn-based alloy. The coating is also referred to as a film, an alloyed plating layer, or an intermetallic compound layer.

The coating primarily containing an Fe-Al-based alloy is a coating containing 70 mass% or more of Fe and Al in total, and the coating primarily containing an Fe-Zn-based alloy is a coating containing 70 mass% or more of Fe and Zn in total. The coating primarily containing an Fe-Al-based alloy may further contain, in addition to Fe and Al, Si, Mg, Ca, Sr, Ni, Cu, Mo, Mn, Cr, C, Nb, Ti, B, V, Sn, W, Sb, Zn, Co, In, Bi, Zr, Se, As, and REM, and a remainder including impurities. The coating primarily containing an Fe-Zn-based alloy may further contain, in addition to Fe and Zn, Si, Mg, Ca, Sr, Ni, Cu, Mo, Mn, Cr, C, Nb, Ti, B, V, Sn, W, Sb, Al, Co, In, Bi, Zr, Se, As, and REM, and a remainder including impurities.

By including the coating, corrosion resistance is improved, and an effect of improving the hydrogen embrittlement resistance in use in a vehicle can be obtained.

A thickness of the coating is preferably 10 to 100 $\mu$m.

In a case where the coating is formed on the surface of the steel member, the above-described surface that serves as the reference for the 1/4 depth is a surface excluding the coating.

The thickness of the coating can be obtained by observing a cross section with a scanning electron microscope.

Specifically, a measurement sample is cut out from a 1/2 portion of the steel member in a longitudinal direction (a 1/2 position of a length in the longitudinal direction from an end portion in the longitudinal direction) and a 1/4 width portion (a 1/4 position of the width in the width direction from the end portion in the width direction) and is observed. An observation range of the microscope is set to, for example, a range of 40,000 $\mu$m$^2$ or more in terms of area at a magnification of 400-fold. The cut sample is mechanically polished and subsequently mirror-finished. Next, the thicknesses of the coating in 10 random visual fields are measured, and an average value thereof is regarded as the thickness of the coating.

When observation is performed with a BSE image (or a COMPO image) a clear difference is confirmed in contrast between the coating and the base metal (steel substrate). Therefore, the thickness of the coating can be measured by measuring a thickness from an outermost surface to a position where the contrast changes. Measurement is performed at 20 points at equal intervals in an observation photograph, and a distance between the measurement points is set to 6.5 $\mu$m. During the measurement, observation is performed in five visual fields in the above-described manner, and an average value thereof is used as the thickness of the coating.

In addition, as the chemical composition of the coating, the amounts of Fe, Al, and Zn contained in the coating can be obtained by performing spot elemental analysis (beam diameter 1 $\mu$m or less) on the observation range described above using an electron probe micro-analyzer (EPMA). A total of 10 points are analyzed in the coating in 10 random visual fields, and average values thereof are regarded as the amounts of Fe, Al, and Zn contained in coating. Even in a case where an element other than Fe, Al, and Zn is contained, the amount thereof is obtained using the same method.

(A4) Shape of Steel Member

A shape of the steel member according to the present embodiment is not particularly limited. That is, the steel member may be a flat sheet, or may be a formed body obtained by forming a steel sheet into a predetermined shape. A hot-formed steel member is often a formed body, and in the present embodiment, a case of a formed body and a case of a flat sheet are collectively referred to as a "steel member". Furthermore, the steel member may be a tailored property material having different strengths depending on points. In this case, it is preferable that at least a part of the steel member has a tensile strength of more than 1.5 GPa. The tailored property material may be a material obtained by joining steel sheets which are different in chemical composition, strength, and sheet thickness, or may be a material obtained by subjecting a part of a steel sheet to a heat treatment. In addition, the steel member may be provided with a decarburized layer or a soft layer in a part of a surface layer.

(A5) Characteristics of Steel Member

By controlling the metallographic structure at the 1/4 depth position as described above, the steel member according to the present embodiment has strength as high as a tensile strength of more than 1,500 MPa (1.5 GPa) and excellent hydrogen embrittlement resistance, and thus achieves a reduced risk of hydrogen embrittlement in applications to vehicles. The tensile strength is preferably 1,800 MPa or more.

On the other hand, the tensile strength is preferably 3,000 MPa or less, and more preferably 2,900 MPa or less in terms of hydrogen embrittlement resistance.

In the present embodiment, the hydrogen embrittlement resistance is evaluated by a hydrogen charging delayed fracture test or a corrosion test assuming an application to a vehicle body component. For example, the hydrogen embrittlement resistance is evaluated by subjecting the steel member to hydrogen charging and to four-point bending and observing whether or not cracking occurs in a room while applying a stress, or by placing the steel member in an accelerated corrosion testing machine and observing whether or not cracking occurs after a predetermined number of cycles.

(B) Steel Sheet

Next, a steel sheet that serves as a material of the steel member according to the present embodiment (hereinafter, sometimes referred to as a steel sheet according to the present embodiment) will be described. The steel member can be obtained by performing a heat treatment, which will be described later, on the steel sheet described below.

(B1) Chemical Composition of Steel Sheet

A range of a chemical composition of the steel sheet according to the present embodiment is the same as the chemical composition of the steel member according to the present embodiment, and the reason for its limitation is also the same.

For example, the chemical composition of the steel sheet is obtained by taking a 1/4 position (1/4 depth position) of a sheet thickness in a sheet thickness direction from a surface of the steel sheet as a representative position, and performing elemental analysis at the position using a general method such as ICP.

Here, a surface that serves as a reference for the 1/4 depth position is the surface of the steel sheet. However, in a case where the surface has a coating (a case where the steel sheet has a base steel sheet and a coating formed on a surface of the base steel sheet), the surface is the surface of the base steel sheet excluding the coating. This also applies to the 1/4 depth position that defines the metallographic structure.

(B2) Metallographic Structure of Steel Sheet

In the steel sheet according to the present embodiment, in the metallographic structure at the 1/4 depth position, a volume fraction of a region (also called granular bainite) that is surrounded by boundaries having an average crystal orientation difference of 5° or more and has an average crystal orientation difference of 0.4° or more and 3.0° or less inside the boundaries is 85% or less.

The granular bainite is a base structure from which an internal structure of the above-described steel member is obtained by the heat treatment, which will be described later, and there are cases where, when the volume fraction of granular bainite is more than 85%, L49-56°/L4-12° of the above-described steel member becomes less than 1.10. The volume fraction of granular bainite is preferably 80% or less, more preferably 10% or less, and even more preferably 5% or less. The volume fraction of granular bainite may be 2% or more.

In addition, in the steel sheet according to the present embodiment, a volume fraction of retained austenite is 5% or less. When the volume fraction of retained austenite is more than 5%, there are cases where a shape of the steel sheet deteriorates.

A remainder in microstructure may contain ferrite and pearlite, or bainite and martensite under the conditions of a manufacturing method, which will be described later. The martensite also includes tempered or auto-tempered martensite. The auto-tempered martensite is tempered martensite generated during cooling at the time of quenching without a heat treatment for tempering, and is generated by in-situ tempering of martensite generated due to heating associated with martensitic transformation.

Next, a method of measuring a volume fraction of grains having an average crystal orientation difference of 0.4° or more and 3.0° or less inside grains surrounded by grain boundaries having an average crystal orientation difference of 5° or more: granular bainite will be described.

A sample is cut out from a position 50 mm or more away from an end portion of the steel sheet so that a cross section perpendicular to the surface (sheet thickness cross section) can be observed. A size of the sample depends on a measuring apparatus, but may be set so that a size of about 10 mm can be observed in the rolling direction. In the cut sample, a measurement region of 100 $\mu$m × 100 $\mu$m centered on the 1/4 position of the sheet thickness from the surface is subjected to EBSD analysis at a measurement interval of 0.2 $\mu$m to obtain crystal orientation information. Here, the EBSD analysis is performed using an apparatus including a thermal field-emission scanning electron microscope (JSM-7001F manufactured by JEOL Ltd.) and an EBSD detector (DVC5 type detector manufactured by TSL solutions) at an analysis speed of 200 to 300 points/second. A scanning electron microscope and an EBSD detector having performance equal to or higher than those described above may be used, but an apparatus manufactured by JEOL Ltd. and TSL solutions is desirable.

From the obtained crystal orientation information, an area fraction of granular bainite can be easily calculated by using, for example, the "Grain Average Misorientation" function provided in the software "OIM Analysis (registered trademark)" included in the EBSD analysis apparatus. With this function, for the grains having a body-centered structure, it is possible to calculate an orientation difference between adjacent measurement points and thereafter obtain an average value of all the measurement points in the grains. For the obtained crystal orientation information, a region having an orientation difference of 5° or more is defined as a grain, and by calculating an area fraction of regions having an average crystal orientation difference of 0.4° or more and 3.0° or less in the grains by the "Grain Average Misorientation" function, the area fraction of granular bainite can be obtained. Measurement is performed in five visual fields, and an average value of the area fractions of granular bainite in each visual field is taken as the area fraction of granular bainite in the present embodiment. In the steel sheet according to the present embodiment, assuming that the area fraction is equal to the volume fraction, this is regarded as the volume fraction of granular bainite in the present embodiment.

A volume fraction of each of other structures of the steel sheet according to the present embodiment can be determined by the same method as that for the steel member described above.

(B3) Surface of Steel Sheet

A part of the surface of the steel sheet according to the present embodiment may have a coating. The coating may be a coating primarily containing Al (Al-based coating) or a coating primarily containing Zn (Zn-based coating). The coating is also referred to as a film or a plating layer. The coating primarily containing Al is a coating containing 70 mass% or more of Al, and the coating primarily containing Zn is a coating containing 70 mass% or more of Zn. The coating primarily containing Al may further contain, in addition to Al, Si, Mg, Ca, Sr, Ni, Cu, Mo, Mn, Cr, C, Nb, Ti, B, V, Sn, W, Sb, Zn, Co, In, Bi, Zr, Se, As, and REM, and a remainder including impurities. The coating primarily containing Zn may further contain, in addition to Zn, Si, Mg, Ca, Sr, Ni, Cu, Mo, Mn, Cr, C, Nb, Ti, B, V, Sn, W, Sb, Al, Co, In, Bi, Zr, Se, As, and REM, and a remainder including impurities.

(B4) Shape of Steel Sheet

The shape of the steel sheet according to the present embodiment is not particularly limited. That is, the steel sheet may be a flat sheet, or may be a tailored property material obtained by joining steel sheets which are different in strength or sheet thickness.

Next, a manufacturing method of the steel sheet according to the present embodiment will be described.

(C) Manufacturing Method of Steel Sheet

A manufacturing method of the steel sheet according to the present embodiment suitable as a material of the steel member according to the present embodiment is not limited, and the steel sheet can be manufactured by using, for example, a manufacturing method including the following steps:

(i) a slab preparation step of melting and casting a steel having the above chemical composition, to manufacture a slab;

(ii) a hot rolling step of hot-rolling the obtained slab into a hot-rolled steel sheet;

(iii) a coiling step of coiling the hot-rolled steel sheet;

(iv) a hot-rolled sheet annealing step of annealing the hot-rolled steel sheet after the coiling step as necessary;

(v) as necessary, a cold rolling step of descaling the hot-rolled steel sheet after the coiling step or after the hot-rolled sheet annealing step and cold-rolling the hot-rolled steel sheet into a cold-rolled steel sheet;

(vi) an annealing step of annealing the hot-rolled steel sheet or the cold-rolled steel sheet to obtain an annealed steel sheet as necessary; and

(vii) a coating step of applying a coating to the hot-rolled steel sheet, the cold-rolled steel sheet, or the annealed steel sheet to obtain a coated steel sheet as necessary.

Hereinafter, preferable conditions for each step will be described. Well-known conditions can be applied to conditions that are not described.

<Slab Preparation Step>

In the slab preparation step, a steel having the above chemical composition is melted and cast to manufacture a slab to be subjected to hot rolling. For example, a slab manufactured by melting molten steel having the above chemical composition using a converter or an electric furnace and performing a continuous casting method thereon can be used. Instead of the continuous casting method, an ingot-making method, a thin slab casting method, or the like may also be adopted.

In a case of performing continuous casting, it is preferable that an average casting rate is set to 0.3 to 2.0 m/min and a bending straightening temperature is set to 500°C or higher and 1,000°C or lower.

When the average casting rate is faster than 2.0 m/min, homogeneity of the slab deteriorates, which is not preferable. In general, when the casting rate is slow, a slab that solidifies uniformly and has good homogeneity in which alloying elements are dispersed can be obtained. Therefore, homogeneity of a slab manufactured with an average casting rate of 2.0 m/min or slower in the continuous casting is sufficiently high. In the steel sheet that uses the slab manufactured under such conditions, the grain boundary length ratio L49-56°/L4-12° in the steel member is likely to increase by a heat treatment described later. Therefore, it is possible to realize a steel sheet having excellent hydrogen embrittlement resistance. On the other hand, when the average casting rate is 0.3 m/min, productivity decreases. Therefore, the average casting rate is preferably 0.3 m/min or faster.

When the bending straightening temperature is lower than 500°C, deformability decreases, and it becomes difficult to perform bending straightening, which is not preferable. In addition, when the bending straightening temperature is higher than 1,000°C, the shape is deteriorated due to temperature unevenness, which is not preferable.

The average casting rate is more preferably 0.6 to 0.9 m/min, and the bending straightening temperature is more preferably 600°C to 800°C.

In order to suppress cracking in bending straightening, as described above, it is preferable that when [Nb] = 0.01 or more and less than 0.03, [Ti] = 3 × [N] + 0.010 to 3 × [N] + 0.020 (3 × [N] + 0.010 ≤ [Ti] ≤ 3 × [N] + 0.020), when [Nb] = 0.03 or more and less than 0.05, [Ti] = 5 × [N] + 0.010 to 5 × [N] + 0.020 (5 × [N] + 0.010 ≤ [Ti] ≤ 5 × [N] + 0.020), and when [Nb] = 0.05 to 0.10, [Ti] = 7 × [N] + 0.010 to 7 × [N] + 0.020 (7 × [N] + 0.010 ≤ [Ti] ≤ 7 × [N] + 0.020).

In addition, in the slab, it is preferable that [Ni]/[Cu] ≥ 0.5 is satisfied for the purpose of suppressing Cu hot embrittlement in the subsequent hot rolling step. On the other hand, in the steel member, in order to increase L49-56°/L4-12°, [Ni]/[Cu] < 0.5 is preferable. In that case, the Cu hot embrittlement can be suppressed by controlling the Nb and Ti contents as described above.

<Hot Rolling Step>

In the hot rolling step, the slab is heated, subjected to rough rolling, then subjected to descaling as necessary, and finally subjected to finish rolling. In the hot rolling step, hot rolling conditions are not limited. A finish rolling temperature is preferably set to 900°C or higher and 1,060°C or lower.

<Coiling Step>

In the coiling step, for example, the hot-rolled steel sheet after the hot rolling step is coiled in a temperature range of 850°C or lower. When a coiling temperature is higher than 850°C, the hot-rolled steel sheet is coiled while transformation hardly progresses and the transformation progresses in the coil, so that there are cases where a coil shape is defective, which is not preferable. On the other hand, in order to reduce the volume fraction of granular bainite in the steel sheet, coiling is performed preferably at 450°C or higher, and more preferably at 550°C or higher.

<Hot-Rolled Sheet Annealing Step>

In the annealing step of the hot-rolled steel sheet, for example, annealing may be performed at 450°C to 950°C for five hours or longer in an atmosphere containing 80 vol% or more of nitrogen or in the air atmosphere as necessary. Hot-rolled sheet annealing softens the hot-rolled steel sheet and makes it possible to reduce a load in the cold rolling step, which is the subsequent step, which is preferable.

<Cold Rolling Step>

In the cold rolling step, the hot-rolled steel sheet after the hot-rolled sheet annealing step (in a case where the hot-rolled sheet annealing step is not performed, the hot-rolled steel sheet after the coiling step) is subjected to descaling and is cold-rolled into a cold-rolled steel sheet. Descaling and cold rolling do not necessarily have to be performed. However, in a case where cold rolling is performed, a cumulative rolling reduction in the cold rolling is preferably set to 30% or more from the viewpoint of securing good flatness. On the other hand, in order to prevent a rolling force from becoming excessive, the cumulative rolling reduction in the cold rolling is preferably set to 80% or less.

A descaling method is not particularly limited, but pickling is preferable. Furthermore, in a case where pickling is performed, it is preferable to remove only iron scale by pickling with hydrochloric acid or sulfuric acid.

<Annealing Step>

In a case where annealing is performed before forming the coating, the hot-rolled steel sheet or the cold-rolled steel sheet is annealed in a temperature range of 700°C to 950°C to obtain an annealed steel sheet. The annealing step softens the cold-rolled steel sheet and facilitates threading in a plating step, which is the subsequent step, which is preferable.

<Coating Step>

In a case of forming the coating on the surface, in the coating step, a coating is formed on the surface of the steel sheet (the hot-rolled steel sheet after the coiling step, the hot-rolled steel sheet after the hot-rolled sheet annealing step, the cold-rolled steel sheet after the cold rolling step, or the annealed steel sheet after the annealing step) to obtain a coated steel sheet. A method for forming the coating is not particularly limited, and a hot-dip plating method, an electro plating method, a vacuum vapor deposition method, a cladding method, a thermal spraying method, and the like can be used. The hot-dip plating method is the most popular in the industry.

Examples of the coating may include an Al-based coating containing Al and a Zn-based coating containing Zn.

In a case where the Al-based coating is formed by hot-dip plating, in addition to Al, Fe is mixed in a plating bath as an impurity in many cases. Furthermore, in addition to the above elements, Si, Mg, Ca, Sr, Ni, Cu, Mo, Mn, Cr, C, Nb, Ti, B, V, Sn, W, Sb, Zn, Co, In, Bi, Zr, Se, As, mischmetal, and the like may be contained in the plating bath as long as 70 mass% or more of Al is contained.

In the case of performing hot-dip plating, plating may be performed after the annealed steel sheet after the annealing step is cooled to room temperature and is then heated again, or hot-dip plating may be performed after performing cooling to 650°C to 750°C, which is close to a plating bath temperature, after annealing without temporarily performing cooling to room temperature.

Pretreatments and post-treatments of the coating are not particularly limited, and precoating, solvent coating, an alloying treatment, temper rolling, or the like can be performed. As the alloying treatment, for example, annealing at 450°C to 800°C can be performed. Furthermore, as a post-treatment, temper rolling is useful for shape adjustment and the like, and can achieve, for example, a rolling reduction of 0.1% to 0.5%.

(D) Manufacturing Method of Steel Member

A manufacturing method of the steel member according to the present embodiment is not limited, and the steel member can be manufactured by using, for example, a manufacturing method including the following steps for the above-described steel sheet.

<Heat Treatment Step>

In a heat treatment step, a heat treatment is performed on the steel sheet according to the present embodiment having the predetermined chemical composition to obtain the steel member. The heat treatment is performed, for example, under conditions in which the steel sheet obtained by a method described the above is heated to an Ac3 point to (Ac3 point + 300)°C at an average temperature rising rate of 1.0 to 1,000 °C/s and is cooled to an Ms point or lower at an average cooling rate equal to or faster than an upper critical cooling rate.

When the temperature rising rate is slower than 1.0 °C/s, productivity of the heat treatment decreases, which is not preferable. On the other hand, when the temperature rising rate is faster than 1,000 °C/s, a duplex grain structure is formed and the limit hydrogen amount decreases, which is not preferable.

Furthermore, when the heat treatment temperature is lower than the Ac3 point (°C), ferrite remains after cooling and the strength is insufficient, which is not preferable. On the other hand, when the heat treatment temperature is higher than the Ac3 point + 300°C, coarse grains are formed in the structure, and the limit hydrogen amount decreases, which is not preferable.

The upper critical cooling rate is a minimum cooling rate at which austenite is supercooled to generate martensite without causing precipitation of ferrite or pearlite in the structure. When cooling is performed at slower than the upper critical cooling rate, ferrite or pearlite is generated, resulting in insufficient strength.

During heating, holding may be performed for 1 to 300 seconds within a range of the heating temperature $\pm$ 10°C.

In addition, after cooling to a temperature equal to or lower than the Ms point, a tempering treatment may be performed in a temperature range of about 100°C to 600°C in order to adjust the strength of the steel member.

The Ac3 point, the Ms point, and the upper critical cooling rate are measured by the following method.

Strip-shaped test pieces each having a width of 30 mm and a length of 200 mm are cut out from the steel sheet according to the present embodiment, and the test pieces are heated to 1,000°C at a temperature rising rate of 10 °C/s in a nitrogen atmosphere, held at the temperature for five minutes, and then cooled to room temperature at various cooling rates. The cooling rates are set at intervals of 10 °C/s (here, 1 °C/s is followed by 10 °C/s) from 1 °C/s to 100 °C/s. By measuring changes in thermal expansion of each of the test pieces during heating and cooling at that time, the Ac3 point and the Ms point are measured.

Furthermore, among the test pieces cooled at the above cooling rates, the minimum cooling rate at which ferrite is not precipitated is defined as the upper critical cooling rate. Furthermore, an Ms point obtained from changes in thermal expansion in the case of cooling the steel sheet at the upper critical cooling rate or faster is defined as the Ms point of the steel sheet.

The Ac3 point and the Ms point are measured five times in the above-described manner, and averages thereof are taken.

Here, in the series of heat treatments, hot forming such as hot stamping may be performed simultaneously with a step of heating to a temperature range of the Ac3 point to (Ac3 point + 300)°C and then cooling to the Ms point, that is, cooling at the upper critical cooling rate or faster. As the hot forming, there are bending, drawing, stretching, hole widening, flange forming, and the like. Furthermore, the present invention may be applied to a forming method other than press forming, for example, roll forming, as long as a method for cooling the steel sheet is provided simultaneously with or immediately after forming. In a case where the thermal history described above is followed, hot forming may be repeatedly performed. In addition, the series of heat treatments may be repeated a plurality of times.

As described above, the steel member according to the present embodiment includes both a formed body obtained by performing hot forming on a steel sheet and a flat sheet obtained by performing only a heat treatment on a steel sheet.

Furthermore, as the steel member according to the present embodiment, a steel member having regions different in strength may be obtained by performing hot forming or a heat treatment on a portion of the steel sheet that serves as a material.

The series of heat treatments can be performed by any method, and, for example, heating may be performed by induction heating, energization heating, infrared heating, or furnace heating. Furthermore, cooling may also be performed by water cooling, die cooling, or the like. As an atmosphere in a heating furnace, city gas or nitrogen gas may be used in addition to the air. In addition, in order to suppress the generation of hydrogen during the heat treatment, a dew point in the heating furnace may be controlled.

[Examples]

Hereinafter, the present invention will be described more specifically with reference to examples, but the present invention is not limited to the examples.

<Example 1>

Steels having the chemical compositions shown in Table 1-1 and Table 1-2 (subsequent to Table 1-1) were melted and continuously cast under the conditions shown in Table 2-1 to obtain slabs for hot rolling. The obtained slabs were hot-rolled and coiled at a temperature of 850°C or lower to obtain hot-rolled steel sheets having a thickness of 3.2 mm. The hot-rolled steel sheets were pickled and then cold-rolled to obtain cold-rolled steel sheets having a thickness 1.6 mm. For some of the steel sheets, after the cold rolling, the steel sheets were heated to 760°C, held for 10 seconds to be annealed, and, furthermore, immersed in an Al plating bath containing 10% of Si and 2% of Fe with a remainder including impurities at 680° to obtain Al-plated steel sheets (coating in Table 2-2: Al). In addition, some of the steel sheets were immersed in a molten zinc bath including Zn and impurities to obtain galvanized steel sheets (coating in Table 2-2: Zn). Thicknesses of the coatings were all adjusted to 25 μm.

Chemical compositions of the steel sheets at a 1/4 position of a sheet thickness from a surface in a sheet thickness direction were measured, and a result thereof was similar to the chemical composition of the slab. In addition, [Ni]/[Cu] is as shown in Table 2-1.

[Table 1-1]

| Steel No. | Chemical composition (mass%), remainder including Fe and impurities | | | | | | | | | | | | | | | | | |
|---|---|---|---|---|---|---|---|---|---|---|---|---|---|---|---|---|---|---|
| | C | Si | Mn | P | S | N | O | Nb | Ti | Cu | Ni | Cr | B | Mo | V | Ca | Mg | Al |
| A1 | 0.27 | 1.28 | 2.18 | 0.016 | 0.0032 | 0.005 | 0.006 | 0.06 | 0.047 | 0.20 | | | | | | | | |
| A2 | 0.57 | 0.30 | 0.30 | 0.002 | 0.0002 | 0.002 | 0.002 | 0.03 | 0.025 | 0.33 | | | 0.0023 | | | | | 0.05 |
| A3 | 0.36 | 0.18 | 0.70 | 0.007 | 0.0010 | 0.004 | 0.003 | 0.07 | 0.040 | 0.28 | | 0.28 | | | | 0.002 | | |
| A4 | 0.33 | 1.68 | 0.76 | 0.011 | 0.0013 | 0.003 | 0.005 | 0.05 | 0.034 | 0.35 | 0.10 | | | | | | | |
| A5 | 0.42 | 0.51 | 0.14 | 0.014 | 0.0017 | 0.004 | 0.003 | 0.04 | 0.033 | 0.26 | | | 0.0021 | 0.18 | | | | |
| A6 | 0.28 | 0.28 | 2.52 | 0.004 | 0.0003 | 0.003 | . 0.003 | 0.06 | 0.034 | 0.38 | | | 0.0018 | | | | 0.001 | 0.03 |
| A7 | 0.29 | 0.28 | 0.56 | 0.039 | 0.0004 | 0.002 | 0.004 | 0.05 | 0.025 | 0.48 | 0.04 | | 0.0023 | 0.22 | | | | 0.02 |
| A8 | 0.30 | 0.30 | 0.58 | 0.006 | 0.0083 | 0.003 | 0.004 | 0.05 | 0.035 | 0.34 | | | 0.0018 | | | | | 0.03 |
| A9 | 0.29 | 0.45 | 0.82 | 0.007 | 0.0010 | 0.008 | 0.003 | 0.03 | 0.053 | 0.40 | | | | | 0.16 | | | |
| A10 | 0.31 | 0.29 | 0.48 | 0.011 | 0.0013 | 0.003 | 0.008 | 0.05 | 0.037 | 0.28 | 0.06 | | | | | | | |
| A11 | 0.35 | 0.41 | 0.80 | 0.009 | 0.0012 | 0.004 | 0.004 | 0.02 | 0.026 | 0.36 | | 0.25 | | | | | | |
| A12 | 0.30 | 0.38 | 0.66 | 0.008 | 0.0010 | 0.004 | 0.005 | 0.08 | 0.044 | 0.35 | 0.03 | | 0.0008 | | | | | 0.01 |
| A13 | 0.32 | 0.38 | 0.58 | 0.009 | 0.0009 | 0.001 | 0.003 | 0.02 | 0.013 | 0.32 | | 0.22 | | | | | | |
| A14 | 0.36 | 0.40 | 0.63 | 0.007 | 0.0010 | 0.006 | 0.003 | 0.06 | 0.062 | 0.42 | | | 0.0023 | | | | | |
| A15 | 0.35 | 0.30 | 0.52 | 0.009 | 0.0017 | 0.005 | 0.006 | 0.04 | 0.037 | 0.12 | 0.01 | | 0.0015 | | | | | |
| A16 | 0.39 | 0.42 | 0.90 | 0.009 | 0.0004 | 0.004 | 0.003 | 0.03 | 0.036 | 2.13 | 0.28 | | | | | | | |
| A17 | 0.30 | 0.21 | 1.22 | 0.005 | 0.0005 | 0.003 | 0.004 | 0.05 | 0.037 | 0.33 | 0.01 | 0.42 | 0.0020 | | | | | 0.03 |
| A18 | 0.34 | 0.39 | 0.66 | 0.008 | 0.0004 | 0.004 | 0.003 | 0.04 | 0.035 | 0.28 | 0.08 | 0.09 | 0.0026 | 0.18 | | | | 0.04 |
| A19 | 0.33 | 0.22 | 1.20 | 0.005 | 0.0010 | 0.003 | 0.003 | 0.05 | 0.032 | 0.40 | | 0.22 | 0.0022 | | 0.02 | | | 0.03 |
| A2 0 | 0.49 | 0.40 | 0.28 | 0.008 | 0.0004 | 0.003 | 0.003 | 0.03 | 0.030 | 0.35 | 0.07 | 0.11 | 0.0024 | 0.19 | | | | 0.03 |
| A21 | 0.48 | 0.43 | 0.41 | 0.006 | 0.0006 | 0.003 | 0.004 | 0.02 | 0.028 | 0.44 | 0.06 | 0.32 | 0.0022 | 0.21 | | 0.005 | | |
| A22 | 0.34 | 0.39 | 0.66 | 0.008 | 0.0004 | 0.004 | 0.003 | 0.04 | 0.035 | 0.28 | 0.19 | 0.09 | 0.0026 | 0.18 | | | | 0.04 |
| A23 | 0.49 | 0.40 | 0.28 | 0.008 | 0.0004 | 0.003 | 0.003 | 0.03 | 0.030 | 0.35 | 0.20 | 0.11 | 0.0024 | 0.19 | | | | 0.03 |
| a1 | <u>0.21</u> | 0.20 | 0.26 | 0.028 | 0.0044 | 0.006 | 0.006 | 0.07 | 0.060 | 0.42 | | | | | | | | |

(continued)

| Steel No. | Chemical composition (mass%), remainder including Fe and impurities | | | | | | | | | | | | | | | | | |
|---|---|---|---|---|---|---|---|---|---|---|---|---|---|---|---|---|---|---|
| | C | Si | Mn | P | S | N | O | Nb | Ti | Cu | Ni | Cr | B | Mo | V | Ca | Mg | Al |
| a2 | 0.81 | 0.40 | 1.40 | 0.011 | 0.0012 | 0.005 | 0.004 | 0.05 | 0.048 | 0.08 | 0.01 | 0.28 | | | | | | |
| a3 | 0.35 | 0.15 | 0.01 | 0.015 | 0.0019 | 0.004 | 0.005 | 0.03 | 0.033 | 0.26 | | | | | | 0.006 | | |
| a4 | 0.41 | 0.65 | 3.44 | 0.016 | 0.0019 | 0.005 | 0.005 | 0.05 | 0.046 | 0.07 | | | | 0.33 | | | | 0.52 |
| as | 0.38 | 0.25 | v.94 | 0.108 | 0.0014 | 0.003 | 0.004 | 0.03 | 0.026 | 0.06 | 0.28 | | | | | | | |
| a6 | 0.38 | 0.72 | 1.12 | 0.017 | 0.0167 | 0.005 | 0.004 | 0.03 | 0.036 | 0.02 | | | | | | | 0.006 | |
| a7 | 0.41 | 0.55 | 1.24 | 0.014 | 0.0018 | 0.018 | 0.004 | 0.02 | 0.070 | 0.03 | 0.23 | 0.44 | | | | | | |
| a8 | 0.43 | 0.57 | 1.08 | 0.015 | 0.0014 | 0.005 | 0.020 | 0.07 | 0.047 | 0.02 | | | 0.0075 | | | | | |
| a9 | 0.40 | 0.66 | 1.55 | 0.015 | 0.0022 | 0.005 | 0.006 | 0.00 | 0.028 | 0.02 | 0.25 | | | | 0.18 | | | |
| a10 | 0.42 | 0.51 | 1.96 | 0.017 | 0.0016 | 0.005 | 0.005 | 0.18 | 0.051 | 0.03 | | | | | | | | |
| a11 | 0.39 | 0.48 | 1.44 | 0.018 | 0.0012 | 0.005 | 0.004 | 0.06 | 0.001 | 0.33 | | | | | | | | 0.27 |
| a12 | 0.40 | 0.46 | 0.88 | 0.039 | 0.0067 | 0.007 | 0.006 | 0.08 | 0.264 | 0.43 | | 0.39 | | | | | | |
| a13 | 0.43 | 0.34 | 1.78 | 0.015 | 0.0020 | 0.005 | 0.006 | 0.03 | 0.043 | 0.03 | 0.13 | | | | | | | |
| a14 | 0.36 | 0.51 | 0.68 | 0.012 | 0.0022 | 0.005 | 0.004 | 0.04 | 0.039 | 0.01 | 0.42 | 0.38 | | 0.21 | | 0.002 | | |
| a15 | 0.28 | 0.20 | 1.10 | 0.015 | 0.0020 | 0.005 | 0.005 | 0.00 | 0.001 | 0.30 | 0.03 | 0.34 | | | | | | 0.03 |

[Table 1-2]

| Steel No. | Chemical composition (mass%), remainder including Fe and impurities | | | | | | | | | | | | | | Transformation point (°C) | | Upper critical cooling rate (°C/s) |
|---|---|---|---|---|---|---|---|---|---|---|---|---|---|---|---|---|---|
| | Sn | W | Sb | Zr | Se | Bi | As | Ta | Re | os | Ir | Tc | Co | REM | Ac3 | Ms | |
| . A1 | | | | | | | | | | | | | | | 857 | 357 | 30 |
| A2 | | | | | | | | | | | | | | | 778 | 318 | 10 |
| A3 | | | | | | | | | | | | | | | 784 | 386 | 30 |
| A4 | | | | 0.27 | | | | | | | | | | | 904 | 387 | 20 |
| AS | | | | | | | | | | | | | | | 827 | 385 | 30 |
| A6 | | 0.52 | | | | | | | | | | | | 0.19 | 767 | 347 | 10 |
| A7 | | | | | | | | 0.41 | | | | | | | 845 | 413 | 30 |
| A8 | | | | 0.34 | | | | | | 0.18 | | | | | 815 | 413 | 30 |
| A9 | | | | | 0.25 | | | | | | | | | | 840 | 411 | 30 |
| A10 | | | | | | | | | | 021 | 0.14 | | | | 808 | 417 | 30 |
| A11 | 0.17 | | | | | | | | | | 0.24 | | | | 805 | 373 | 30 |
| A12 | | | | | | | | | 0.33 | | | | 0.08 | | 803 | 408 | 30 |
| A13 | | | 0.22 | | | | 0.11 | | | | | | | | 799 | 407 | 30 |
| A14 | | 0.25 | | | | | 0.20 | | | | | | | | 815 | 389 | 30 |
| A15 | | | | | | | | | | | | | | 0.24 | 798 | 401 | 30 |
| A16 | | | | | | | | | | | | | | | 757 | 320 | 10 |
| A17 | | | | | | | | | | | | 0.01 | | | 780 | 385 | 20 |
| A18 | | | | | | | | | | | | | | | 817 | 387 | 20 |
| A19 | 0.01 | | | | | | | | | | | | | | 793 | 373 | 10 |
| A20 | | 0.41 | | | | | | | | | | | | | 804 | 348 | 20 |
| A21 | | | | | | | | | | | | | | 0.02 | 788 | 341 | 20 |
| A22 | | | | | | | | | | | | | | | 811 | 391 | 20 |
| A23 | | 0.41 | | | | | | | | | | | | | 812 | 338 | 20 |

(continued)

| Steel No. | Chemical composition (mass%), remainder including Fe and impurities | | | | | | | | | | | | | | Transformation point (°C) | | Upper critical cooling rate (°C/s) |
|---|---|---|---|---|---|---|---|---|---|---|---|---|---|---|---|---|---|
| | Sn | W | Sb | Zr | Se | Bi | As | Ta | Re | os | Ir | Tc | Co | REM | Ac3 | Ms | |
| a1 | | | | | | | | | | | | | | | 866 | 473 | 40 |
| a2 | | | | | | | 0.55 | | | | | | | | 666 | 171 | 10 |
| a3 | | | | | | | | | | | | | | | 833 | 424 | 100 |
| a4 | | | | | | | | | | | | | | | 829 | 257 | 10 |
| as | | | | 0.42 | | | | | | | | | | | 864 | 370 | 30 |
| a6 | | | 0.32 | | | | | | | | | | | | 823 | 367 | 30 |
| a7 | | 0.33 | | | | | | | | | | | | | 817 | 336 | 30 |
| a8 | | | | | | | | | | 0.22 | | | | 0.22 | 824 | 352 | 30 |
| a9 | | | | | 0.11 | | | | | | | | | | 824 | 335 | 20 |
| a10 | | | 0.35 | | | 0.18 | | | | | | | | | 779 | 313 | 20 |
| a11 | | | | | | | | | | | | 0.12 | | | 825 | 345 | 30 |
| a12 | | | | | | | | 0.22 | | | 0.11 | | | | 914 | 350 | 20 |
| a13 | 0.38 | | | | | | | | 0.17 | | | 0.25 | | | 789 | 320 | 30 |
| a14 | | | | | | | | | | | | | 0.01 | | 809 | 374 | 20 |
| a15 | 0.12 | | | | | | | | | | | | | | 809 | 374 | 30 |

In the obtained steel sheets, a volume fraction of a region (granular bainite) that is surrounded by boundaries having a crystal orientation difference of 5° or more and has an average crystal orientation difference of 0.4° or more and 3.0° or less inside the boundaries, and a volume fraction of retained austenite were evaluated by the above-described methods. The evaluation results are shown in Table 2-2.

Although not shown in the tables, a remainder of the metallographic structure included ferrite and pearlite.

[Table 2-1]

| | Symbol | Steel No. | [Ni] / [Cu] | Ti = (3, 5, or 7) × N + 0.010 to 0.020 O: within range, X: outside range | Continuous casting Average casting rate m/min | Continuous casting Bending straightening temperature °C | Continuous casting O: not cracked X: cracked | Hot rolling CT (°C) | Hot rolling O: not cracked X: cracked |
|---|---|---|---|---|---|---|---|---|---|
| Invention Example | B1 | A1 | 0.00 | O | 0.9 | 720 | O | 520 | O |
| | B2 | A2 | 0.00 | O | 0.9 | 720 | O | 520 | O |
| | B3 | A3 | 0.00 | O | 0.9 | 720 | O | 520 | O |
| | B4 | A4 | 0.29 | O | 0.9 | 720 | O | 520 | O |
| | B5 | A5 | 0.00 | O | 0.9 | 720 | O | 520 | O |
| | B6 | A6 | 0.00 | O | 0.9 | 720 | O | 520 | O |
| | B7 | A7 | 0.08 | O | 0.9 | 720 | O | 520 | O |
| | B8 | A8 | 0.00 | O | 0.9 | 720 | O | 520 | O |
| | B9 | A9 | 0.00 | O | 0.9 | 720 | O | 520 | O |
| | B10 | A10 | 0.21 | O | 0.9 | 720 | O | 520 | O |
| | B11 | A11 | 0.00 | O | 0.9 | 720 | O | 520 | O |
| | B12 | A12 | 0.09 | O | 0.9 | 720 | O | 520 | O |
| | B13 | A13 | 0.00 | O | 0.9 | 720 | O | 520 | O |
| | B14 | A14 | 0.00 | O | 0.9 | 720 | O | 520 | O |
| | B15 | A15 | 0.08 | O | 0.9 | 720 | O | 520 | O |
| | B16 | A16 | 0.13 | O | 0.9 | 720 | O | 520 | O |
| | B17 | A17 | 0.03 | O | 0.9 | 720 | O | 520 | O |
| | B18 | A17 | 0.03 | O | 0.9 | 720 | O | 720 | O |
| | B19 | A18 | 0.29 | O | 0.9 | 720 | O | 520 | O |
| | B20 | A18 | 0.29 | O | 0.9 | 720 | O | 720 | O |
| | B21 | A19 | 0.00 | O | 0.9 | 720 | O | 520 | O |
| | B22 | A19 | 0.00 | O | 0.9 | 720 | O | 720 | O |
| | B23 | A20 | 0.20 | O | 0.9 | 720 | O | 520 | O |
| | B24 | A20 | 0.20 | O | 0.9 | 720 | O | 720 | O |
| | B25 | A21 | 0.14 | O | 0.9 | 720 | O | 520 | O |
| | B26 | A21 | 0.14 | O | 0.9 | 720 | O | 720 | O |
| | B27 | A22 | 0.68 | O | 0.9 | 720 | O | 520 | O |
| | B28 | A22 | 0.68 | O | 0.9 | 720 | O | 720 | O |
| | B29 | A23 | 0.57 | O | 0.9 | 720 | O | 520 | O |
| | B30 | A23 | 0.57 | O | 0.9 | 720 | O | 720 | O |
| | B31 | A18 | 0.29 | O | 0.6 | 640 | O | 720 | O |
| | B32 | A18 | 0.29 | O | 1.2 | 860 | O | 720 | O |
| | B33 | A19 | 0.00 | O | 0.6 | 640 | O | 720 | O |
| | B34 | A19 | 0.00 | O | 1.2 | 860 | O | 720 | O |
| | B35 | A20 | 0.20 | O | 0.6 | 640 | O | 720 | O |
| | B36 | A20 | 0.20 | O | 1.2 | 860 | O | 720 | O |
| | B37 | A21 | 0.14 | O | 0.6 | 640 | O | 720 | O |
| | B38 | A21 | 0.14 | O | 1.2 | 860 | O | 720 | O |
| Comparative Example | b1 | a1 | 0.00 | O | 0.9 | 720 | O | 520 | O |
| | b2 | a2 | 0.13 | O | 0.9 | 720 | O | 520 | O |
| | b3 | a3 | 0.00 | O | 0.9 | 720 | O | 520 | O |
| | b4 | a4 | 0.00 | O | 0.9 | 720 | O | 520 | O |
| | b5 | a5 | 4.67 | O | 0.9 | 720 | O | 520 | O |
| | b6 | a6 | 0.00 | O | 0.9 | 720 | O | 520 | O |
| | b7 | a7 | 7.67 | O | 0.9 | 720 | O | 520 | O |
| | b8 | a8 | 0.00 | O | 0.9 | 720 | O | 520 | O |
| | b9 | a9 | 12.50 | - | 0.9 | 720 | O | 520 | O |
| | b10 | a10 | 0.00 | O | 0.9 | 720 | O | 520 | O |
| | b11 | a11 | 0.00 | X | 0.9 | 720 | X | - | - |
| | b12 | a12 | 0.00 | X | 0.9 | 720 | X | - | - |
| | b13 | a13 | 4.33 | O | 0.9 | 720 | O | 520 | O |
| | b14 | a14 | 42.00 | O | 0.9 | 720 | O | 520 | O |
| | b15 | a15 | 0.10 | - | 0.9 | 720 | O | 520 | X |

[Table 2-2]

| | Symbol | Steel sheet | | |
|---|---|---|---|---|
| | | Microstructural fraction | Retained $\gamma$ (volume%) | Coating |
| | | Region that is surrounded by boundaries having crystal orientation difference of 5° or more and has internal crystal orientation difference of 0.4° to 3.0° (volume%) | | |
| Invention Example | B1 | 83 | 0 | - |
| | B2 | 76 | 3 | - |
| | B3 | 82 | 0 | - |
| | B4 | 77 | 2 | Al |
| | B5 | 82 | 2 | Al |
| | B6 | 76 | 3 | Al |
| | B7 | 74 | 0 | Zn |
| | B8 | 77 | 0 | Zn |
| | B9 | 75 | 0 | Zn |
| | B10 | 77 | 1 | - |
| | B11 | 76 | 2 | - |
| | B12 | 77 | 2 | - |
| | B13 | 77 | 0 | Al |
| | B14 | 75 | 0 | Zn |
| | B15 | 84 | 2 | Al |
| | B16 | 71 | 2 | Zn |
| | B17 | 76 | 1 | Al |
| | B18 | 3 | 0 | Al |
| | B19 | 79 | 0 | Al |
| | B20 | 3 | 0 | Al |
| | B21 | 75 | 2 | Al |
| | B22 | 2 | 0 | Al |
| | B23 | 77 | 3 | Al |
| | B24 | 3 | 2 | Al |
| | B25 | 76 | 3 | Al |
| | B26 | 2 | 2 | Al |
| | B27 | 81 | 0 | Al |
| | B28 | 5 | 0 | Al |
| | B29 | 80 | 3 | Al |
| | B30 | 4 | 2 | Al |
| | B31 | 79 | 0 | Al |
| | B32 | 79 | 0 | Al |
| | B33 | 2 | 0 | Al |
| | B34 | 2 | 0 | Al |
| | B35 | 3 | 2 | Al |
| | B36 | 3 | 2 | Al |
| | B37 | 2 | 2 | Al |
| | B38 | 2 | 2 | Al |
| Comparative Example | b1 | 75 | 1 | - |
| | b2 | 86 | 7 | - |
| | b3 | 81 | 0 | - |
| | b4 | 86 | 7 | - |
| | b5 | 87 | 0 | Zn |
| | b6 | 89 | 0 | Zn |
| | b7 | 88 | 2 | Zn |
| | b8 | 89 | 1 | Al |
| | b9 | 89 | 0 | Al |
| | b10 | 88 | 2 | Al |
| | b11 | - | - | - |
| | b12 | - | - | - |
| | b13 | 88 | 1 | - |
| | b14 | 90 | 0 | Al |
| | b15 | - | - | - |

As shown in Tables 2-1 and 2-2, in Invention Examples B1 to B38 satisfying the ranges of the present invention, steel sheets having a predetermined chemical composition and metallographic structure were obtained. On the other hand, Comparative Examples b1 to b15 that did not satisfy the ranges of the present invention did not satisfy the chemical composition and the metallographic structure. In Comparative Examples b11 and b12, cracking had occurred in the continuous casting and in Comparative Example bl5, cracking had occurred in the hot rolling. Therefore, further progression to the subsequent step could not be achieved.

<Example 2>

The steel sheets manufactured in Example 1 were subjected to a heat treatment of heating to the heating temperature shown in Table 3-1 at the temperature rising rate shown in Table 3-1, holding in a range of the heating temperature ± 10°C for 60 seconds, and cooling to a temperature equal to or lower than an Ms point at the average cooling rate shown in Table 3-1 to obtain steel members C1 to C38 and c1 to c12.

Chemical compositions of the steel members at a 1/4 position of a sheet thickness from a surface in a sheet thickness direction were similar to the chemical compositions of the slabs.

In the obtained steel members, a volume fraction of martensite, L49-56°/L4-12°, which is a ratio of a length L49-56° of grain boundaries having an angle of rotation of 49° to 56° to a length L4-12° of grain boundaries having an angle of rotation of 4° to 12° about a <011> direction as a rotation axis among grain boundaries of grains having a body-centered structure, and a size of NbTi(C,N) in the metallographic structure were measured by the above-described methods.

In addition, a tensile strength and a limit hydrogen amount He, which is an index of hydrogen embrittlement resistance, were evaluated in the following manner. The evaluation results are shown in Table 3-2.

<Tensile Strength>

A tensile test was conducted in accordance with the regulations of ASTM Standard E8. A portion of the steel member avoiding end portions was ground to thickness of 1.2 mm, and thereafter a half-sized sheet-shaped test piece of ASTM standard E8 (parallel portion length: 32 mm, parallel portion sheet width: 6.25 mm) was collected so that a test direction was parallel to a rolling direction. Then, a strain gauge (gauge length: 5 mm) was attached to a center of a parallel portion of the test piece in width and length directions, a room temperature tensile test was conducted at a strain rate of 3 mm/min, and the tensile strength (maximum strength) was measured. In this example, a case of having a tensile strength of more than 1,500 MPa was evaluated as having high strength.

<limit Hydrogen Amount Hc>

The hydrogen embrittlement resistance was evaluated by a limit hydrogen amount He at which no cracking had occurred by performing four-point bending on a test piece that had stored hydrogen. Specifically, a strip-shaped test piece having a width of 8 mm and a length of 68 mm was cut out from the steel member so as to avoid the end portions of the steel member. Then, a strain gauge (gauge length: 5 mm) similar to that in the tensile test was attached to the center of the surface of the test piece in the width and length directions, and the test piece was bent with a four-point support jig up to a strain equivalent to 1/2 of the tensile strength. The presence or absence of cracking was observed in the four-point bending test pieces in which various amounts of hydrogen were stored, and the limit hydrogen amount He at which no cracking had occurred was obtained. In a case of an Al-based coating, a hydrogen storage amount was changed by changing a dew point in a furnace during the heat treatment. In addition, in cases of no coating and a Zn-based coating, after four-point bending, the test pieces were immersed in various concentrations of ammonium thiocyanate solution to store hydrogen. A temperature of hydrogen stored in the steel member was raised at 100 °C/hr in thermal hydrogen analysis, and the amount of diffusible hydrogen released up to 250°C was defined as the amount of hydrogen contained in the steel member.

In this example, the hydrogen embrittlement resistance was evaluated as excellent in a case where He is 0.6 mass ppm or more when the tensile strength was 1,500 to less than 2,000 MPa, 0.4 mass ppm or more when the tensile strength was 2,000 to less than 2,500 MPa, and 0.2 mass ppm or more when the tensile strength was 2,500 MPa or more.

Table 3-1]

| | Symbol | Steel Sheet No. | Heat treatment | | |
| | | | Temperature rising rate | Heating temperature | Cooling rate |
| | | | (°C/s) | (°C) | (°C/s) |
| | C1 | B1 | 3 | 920 | 50 |
| | C2 | B2 | 3 | 920 | 50 |
| | C3 | B3 | 3 | 920 | 50 |
| | C4 | B4 | 3 | 920 | 50 |
| | C5 | B5 | 3 | 920 | 50 |
| | C6 | B6 | 3 | 920 | 50 |
| | C7 | B7 | 3 | 920 | 50 |

(continued)

| | Symbol | Steel Sheet No. | Heat treatment | | |
|---|---|---|---|---|---|
| | | | Temperature rising rate | Heating temperature | Cooling rate |
| | | | (°C/s) | (°C) | (°C/s) |
| Invention Example | C8 | B8 | 3 | 920 | 50 |
| | C9 | B9 | 3 | 920 | 50 |
| | C10 | B10 | 3 | 920 | 50 |
| | C11 | B11 | 3 | 920 | 50 |
| | C12 | B12 | 3 | 920 | 50 |
| | C13 | B13 | 3 | 920 | 50 |
| | C14 | B14 | 3 | 920 | 50 |
| | C15 | B15 | 3 | 920 | 50 |
| | C16 | B16 | 3 | 920 | 50 |
| | C17 | B17 | 3 | 920 | 50 |
| | C18 | B18 | 3 | 920 | 50 |
| | C19 | B19 | 3 | 920 | 50 |
| | C20 | B20 | 3 | 920 | 50 |
| | C21 | B21 | 3 | 920 | 50 |
| | C22 | B22 | 3 | 920 | 50 |
| | C23 | B23 | 3 | 920 | 50 |
| | C24 | B24 | 3 | 920 | 50 |
| | C25 | B25 | 3 | 920 | 50 |
| | C26 | B26 | 3 | 920 | 50 |
| | C27 | B27 | 3 | 920 | 50 |
| | C28 | B28 | 3 | 920 | 50 |
| | C29 | B29 | 3 | 920 | 50 |
| | C30 | B30 | 3 | 920 | 50 |
| | C31 | B31 | 3 | 920 | 50 |
| | C32 | B32 | 3 | 920 | 50 |
| | C33 | B33 | 3 | 920 | 50 |
| | C34 | B34 | 3 | 920 | 50 |
| | C35 | B35 | 3 | 920 | 50 |
| | C36 | B36 | 3 | 920 | 50 |
| | C37 | B37 | 3 | 920 | 50 |
| | C38 | B38 | 3 | 920 | 50 |

(continued)

| | Symbol | Steel Sheet No. | Heat treatment | | |
|---|---|---|---|---|---|
| | | | Temperature rising rate | Heating temperature | Cooling rate |
| | | | (°C/s) | (°C) | (°C/s) |
| Comparative Example | c1 | b1 | 3 | 920 | 50 |
| | c2 | b2 | 3 | 920 | 50 |
| | c3 | b3 | 3 | 920 | 50 |
| | c4 | b4 | 3 | 920 | 50 |
| | c5 | b5 | 3 | 920 | 50 |
| | c6 | b6 | 3 | 920 | 50 |
| | c7 | b7 | 3 | 920 | 50 |
| | c8 | b8 | 3 | 920 | 50 |
| | c9 | b9 | 3 | 920 | 50 |
| | c10 | b10 | 3 | 920 | 50 |
| | c11 | b13 | 3 | 920 | 50 |
| | c12 | b14 | 3 | 920 | 50 |

[Table 3-2]

| | Symbol | Steel member | | | | | | | |
|---|---|---|---|---|---|---|---|---|---|
| | | Microstructural fraction | Boundary length | | | Precipitate size | Coating | Tensile strength | Hc |
| | | Martensite | L49-56° | L4-12° | L49-56° /L4-12° | Nb,Ti(C,N) | | | |
| | | (volume%) | (μm) | (μm) | | (μm) | | (MPa) | (mass ppm) |
| | C1 | 100 | 736 | 555 | 1.33 | 7 | - | 1981 | 0.7 |
| | C2 | 96 | 778 | 533 | 1.46 | 4 | - | 2880 | 0.3 |
| | C3 | 100 | 751 | 539 | 1.39 | 9 | - | 2180 | 0.7 |
| | C4 | 99 | 768 | 528 | 1.45 | 6 | Fe-Al | 2093 | 0.6 |
| | C5 | 100 | 749 | 542 | 1.38 | 5 | Fe-Al | 2383 | 0.7 |
| | C6 | 97 | 776 | 517 | 1.50 | 8 | Fe-Al | 2035 | 0.5 |
| | C7 | 100 | 775 | 490 | 1.58 | 5 | Fe-Zn | 1868 | 0.9 |
| | C8 | 100 | 773 | 526 | 1.47 | 6 | Fe-Zn | 1920 | 0.9 |
| | C9 | 99 | 770 | 505 | 1.52 | 4 | Fe-Zn | 1898 | 0.8 |
| | C10 | 98 | 765 | 521 | 1.47 | 6 | - | 1942 | 0.9 |
| | C11 | 98 | 774 | 520 | 1.49 | 3 | - | 2150 | 0.6 |
| | C12 | 99 | 761 | 522 | 1.46 | 12 | - | 1920 | 0.9 |
| | C13 | 99 | 768 | 533 | 1.44 | 3 | Fe-Al | 1999 | 0.8 |
| | C14 | 100 | 777 | 503 | 1.54 | 8 | Fe-Zn | 2176 | 0.6 |
| | C15 | 99 | 708 | 599 | 1.18 | 5 | Fe-Al | 2124 | 0.5 |
| | C16 | 97 | 854 | 448 | 1.91 | 4 | Fe-Zn | 2338 | 1.1 |

(continued)

| | Symbol | Steel member | | | | | | | |
|---|---|---|---|---|---|---|---|---|---|
| | | Microstructural fraction | Boundary length | | | Precipitate size | Coating | Tensile strength | Hc |
| | | Martensite | L49-56° | L4-12° | L49-56° /L4-12° | Nb,Ti(C,N) | | | |
| | | (volume%) | (μm) | (μm) | | (μm) | | (MPa) | (mass ppm) |
| Invention Example | C17 | 100 | 766 | 523 | 1.46 | 6 | Fe-Al | 1989 | 0.7 |
| | C18 | 100 | 776 | 518 | 1.50 | 5 | Fe-Al | 1986 | 0.6 |
| | C19 | 100 | 744 | 549 | 1.36 | 5 | Fe-Al | 2099 | 1.1 |
| | C20 | 100 | 751 | 541 | 1.39 | 4 | Fe-Al | 2091 | 1.0 |
| | C21 | 99 | 780 | 518 | 1.51 | 8 | Fe-Al | 2100 | 0.6 |
| | C22 | 99 | 785 | 508 | 1.55 | 8 | Fe-Al | 2103 | 0.5 |
| | C23 | 98 | 760 | 529 | 1.44 | 5 | Fe-Al | 2690 | 0.6 |
| | C24 | 98 | 768 | 522 | 1.47 | 4 | Fe-Al | 2697 | 0.7 |
| | C25 | 97 | 784 | 517 | 1.52 | 4 | Fe-Al | 2668 | 0.4 |
| | C26 | 97 | 788 | 510 | 1.55 | 3 | Fe-Al | 2666 | 0.5 |
| | C27 | 100 | 708 | 579 | 1.22 | 5 | Fe-Al | 2096 | 0.7 |
| | C28 | 100 | 718 | 576 | 1.25 | 4 | Fe-Al | 2096 | 0.9 |
| | C29 | 98 | 737 | 547 | 1.35 | 5 | Fe-Al | 2695 | 0.4 |
| | C30 | 98 | 740 | 541 | 1.37 | 4 | Fe-Al | 2695 | 0.5 |
| | C31 | 100 | 769 | 538 | 1.43 | 5 | Fe-Al | 2099 | 1.1 |
| | C32 | 100 | 743 | 548 | 1.36 | 5 | Fe-Al | 2099 | 0.8 |
| | C33 | 99 | 794 | 499 | 1.59 | 8 | Fe-Al | 2103 | 0.7 |
| | C34 | 99 | 775 | 518 | 1.50 | 8 | Fe-Al | 2103 | 0.4 |
| | C35 | 98 | 771 | 515 | 1.50 | 4 | Fe-Al | 2697 | 0.8 |
| | C36 | 98 | 762 | 530 | 1.44 | 4 | Fe-Al | 2697 | 0.6 |
| | C37 | 97 | 796 | 504 | 1.58 | 3 | Fe-Al | 2666 | 0.6 |
| | C38 | 97 | 780 | 517 | 1.51 | 3 | Fe-Al | 2666 | 0.4 |

(continued)

| | Symbol | Steel member | | | | | | | |
|---|---|---|---|---|---|---|---|---|---|
| | | Microstructural fraction | Boundary length | | | Precipitate size | Coating | Tensile strength | Hc |
| | | Martensite | L49-56° | L4-12° | L49-56° /L4-12° | Nb,Ti(C,N) | | | |
| | | (volume%) | (μm) | (μm) | | (μm) | | (MPa) | (mass ppm) |
| Comparative Example | c1 | 100 | 779 | 501 | 1.55 | 8 | - | 1433 | 1.2 |
| | c2 | 92 | 593 | 563 | 1.05 | 6 | - | 2928 | 0.1 |
| | c3 | 25 | 749 | 544 | 1.38 | 4 | - | 1056 | 1.2 |
| | c4 | 93 | 590 | 565 | 1.04 | 6 | - | 2699 | 0.1 |
| | c5 | 99 | 583 | 570 | 1.02 | 4 | Fe-Zn | 2287 | 0.3 |
| | c6 | 98 | 561 | 588 | 0.95 | 4 | Fe-Zn | 2316 | 0.2 |
| | c7 | 100 | 566 | 588 | 0.96 | 3 | Fe-Zn | 2452 | 0.2 |
| | c8 | 100 | 561 | 590 | 0.95 | 9 | Fe-Al | 2529 | 0.1 |
| | c9 | 100 | 555 | 591 | 0.94 | - | Fe-Al | 2448 | 0.2 |
| | c10 | 98 | 566 | 584 | 0.97 | 28 | Fe-Al | 2581 | 0.1 |
| | c11 | 100 | 563 | 588 | 0.96 | 4 | - | 2592 | 0.1 |
| | c12 | 100 | 560 | 601 | 0.93 | 5 | Fe-Al | 2178 | 0.2 |

As shown in Tables 3-1 and 3-2, Invention Examples C1 to C38 satisfying the ranges of the present invention obtained good results in terms of both the metallographic structure and properties, but Comparative Examples c1 to c12 not satisfying the ranges of the present invention were inferior in at least one of the strength and hydrogen embrittlement resistance.

[Industrial Applicability]

According to the present invention, it is possible to obtain a steel member and a steel sheet having excellent hydrogen embrittlement resistance and high strength. The coated steel member according to the present invention is particularly suitable for use as a frame component of a vehicle. Since the steel member of the present invention has high strength and excellent hydrogen embrittlement resistance, the steel member contributes to an improvement in fuel efficiency and collision safety when being applied to a vehicle component.

**Claims**

1. A steel member comprising, as a chemical composition, by mass%:

C: 0.26% to 0.65%;
Si: 0% to 2.00%;
Mn: 0.05% to 3.00%;
P: 0.050% or less;
S: 0.0100% or less;
N: 0.010% or less;
O: 0.010% or less;
Nb: 0.01% to 0.10%;
Ti: 0.005% to 0.100%;
Cu: 0.10% to 2.50%;
Ni: 0% to 0.30%;
Cr: 0% to 0.50%;

B: 0% to 0.0100%;
Mo: 0% to 1.00%;
V: 0% to 1.00%;
Ca: 0% to 0.010%;
Mg: 0% to 0.010%;
Al: 0% to 1.00%;
Sn: 0% to 1.00%;
W: 0% to 1.00%;
Sb: 0% to 1.00%;
Zr: 0% to 1.00%;
Se: 0% to 1.00%;
Bi: 0% to 1.00%;
As: 0% to 1.00%;
Ta: 0% to 1.00%;
Re: 0% to 1.00%;
Os: 0% to 1.00%;
Ir: 0% to 1.00%;
Tc: 0% to 1.00%;
Co: 0% to 1.00%;
REM: 0% to 0.30%; and
a remainder: Fe and impurities,
wherein, when a 1/4 position of a thickness in a thickness direction from a surface is defined as a 1/4 depth position,
a metallographic structure at the 1/4 depth position includes 90% or more of martensite by volume fraction,
in the metallographic structure at the 1/4 depth position, L49-56°/L4-12°, which is a ratio of a length L49-56° of grain boundaries having an angle of rotation of 49° to 56° to a length L4-12° of grain boundaries having an angle of rotation of 4° to 12° about a <011> direction as a rotation axis, among grain boundaries of grains having a body-centered structure, is 1.10 or more, and
a tensile strength of the steel member is more than 1,500 MPa.

2. The steel member according to claim 1,

wherein, in the chemical composition, by mass%, when a Ni content is denoted by [Ni], a Cu content is denoted by [Cu], a Nb content is denoted by [Nb], a Ti content is denoted by [Ti], and a N content is denoted by [N],

$$[Ni]/[Cu] < 0.50,$$

when [Nb] = 0.01 or more and less than 0.03, [Ti] = 3 × [N] + 0.010 to 3 × [N] + 0.020,
when [Nb] = 0.03 or more and less than 0.05, [Ti] = 5 × [N] + 0.010 to 5 × [N] + 0.020, and
when [Nb] = 0.05 to 0.10, [Ti] = 7 × [N] + 0.010 to 7 × [N] 0.020, and
NbTi(C,N) is contained in the metallographic structure at the 1/4 depth position, and a size of the NbTi(C,N) is 20 μm or less.

3. The steel member according to claim 1 or 2,
wherein a coating is provided on the surface.

4. The steel member according to claim 3,
wherein the coating primarily contains an Fe-Al-based alloy.

5. The steel member according to claim 3,
wherein the coating primarily contains an Fe-Zn-based alloy.

6. A steel sheet comprising, as a chemical composition, by mass%:

C: 0.26% to 0.65%;
Si: 0% to 2.00%;
Mn: 0.05% to 3.00%;

P: 0.050% or less;
S: 0.0100% or less;
N: 0.010% or less;
O: 0.010% or less;
Nb: 0.01% to 0.10%;
Ti: 0.005% to 0.100%;
Cu: 0.10% to 2.50%;
Ni: 0% to 0.30%;
Cr: 0% to 0.50%;
B: 0% to 0.0100%;
Mo: 0% to 1.00%;
V: 0% to 1.00%;
Ca: 0% to 0.010%;
Mg: 0% to 0.010%;
Al: 0% to 1.00%;
Sn: 0% to 1.00%;
W: 0% to 1.00%;
Sb: 0% to 1.00%;
Zr: 0% to 1.00%;
Se: 0% to 1.00%;
Bi: 0% to 1.00%;
As: 0% to 1.00%;
Ta: 0% to 1.00%;
Re: 0% to 1.00%;
Os: 0% to 1.00%;
Ir: 0% to 1.00%;
Tc: 0% to 1.00%;
Co: 0% to 1.00%;
REM: 0% to 0.30%; and
a remainder: Fe and Impurities,
wherein, in a metallographic structure at a 1/4 depth position, which is a 1/4 position of a sheet thickness in a sheet thickness direction from a surface, a volume fraction of a region that is surrounded by boundaries having a crystal orientation difference of 5° or more and has an average crystal orientation difference of 0.4° or more and 3.0° or less inside the boundaries is 85% or less, and
in the metallographic structure at the 1/4 depth position, a volume fraction of retained austenite is 5% or less.

7. The steel sheet according to claim 6,
wherein, in the metallographic structure, the volume fraction of the region that is surrounded by the boundaries having a crystal orientation difference of 5° or more and has an average crystal orientation difference of 0.4° or more and 3.0° or less inside the boundaries is 10% or less.

8. The steel sheet according to claim 6 or 7,
wherein a coating is provided on the surface.

9. The steel sheet according to claim 8,
wherein the coating is an Al-based coating.

10. The steel sheet according to claim 8,
wherein the coating is a Zn-based coating.

## INTERNATIONAL SEARCH REPORT

| International application No. |
|---|
| **PCT/JP2022/043929** |

**A. CLASSIFICATION OF SUBJECT MATTER**

*C22C 38/00*(2006.01)i; *C22C 38/60*(2006.01)i; *C21D 1/18*(2006.01)n; *C21D 9/00*(2006.01)n; *C21D 9/46*(2006.01)n
FI: C22C38/00 301Z; C22C38/00 301T; C22C38/00 301U; C22C38/60; C21D1/18 C; C21D9/00 A; C21D9/46 F; C21D9/46 J

According to International Patent Classification (IPC) or to both national classification and IPC

**B. FIELDS SEARCHED**

Minimum documentation searched (classification system followed by classification symbols)

C22C38/00-38/60; C21D1/18; C21D9/00; C21D9/46

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2021/100842 A1 (NIPPON STEEL CORP.) 27 May 2021 (2021-05-27) claims, paragraphs [0015]-[0110], fig. 1, 2 | 1-4, 6, 8-9 |
| A | | 5, 7, 10 |
| A | WO 2020/241258 A1 (NIPPON STEEL CORP.) 03 December 2020 (2020-12-03) | 1-10 |
| A | WO 2020/241257 A1 (NIPPON STEEL CORP.) 03 December 2020 (2020-12-03) | 1-10 |
| A | WO 2020/045219 A1 (JFE STEEL CORP.) 05 March 2020 (2020-03-05) | 1-10 |

☐ Further documents are listed in the continuation of Box C.  ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 February 2023** | **21 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/043929**

| Patent document cited in search report | | | Publication date (day/month/year) | Patent family member(s) | | | Publication date (day/month/year) |
|---|---|---|---|---|---|---|---|
| WO | 2021/100842 | A1 | 27 May 2021 | US | 2022/0389553 | A1 | |
| | | | | claims, paragraphs [0029]-[0224], fig. 1, 2 | | | |
| | | | | EP | 4063525 | A1 | |
| | | | | CN | 114729429 | A | |
| | | | | KR | 10-2022-0070329 | A | |
| WO | 2020/241258 | A1 | 03 December 2020 | US | 2022/0195567 | A1 | |
| | | | | CN | 113840936 | A | |
| | | | | KR | 10-2021-0151954 | A | |
| WO | 2020/241257 | A1 | 03 December 2020 | US | 2022/0170128 | A1 | |
| | | | | CN | 113677819 | A | |
| | | | | KR | 10-2021-0132155 | A | |
| WO | 2020/045219 | A1 | 05 March 2020 | US | 2021/0332454 | A1 | |
| | | | | EP | 3828297 | A1 | |
| | | | | CN | 112639146 | A | |
| | | | | KR | 10-2021-0036967 | A | |

Form PCT/ISA/210 (patent family annex) (January 2015)

**EP 4 442 849 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021193323 A
- JP 2002102980 A
- JP 2012180594 A
- JP 2012001802 A
- WO 2015182596 A
- WO 2015182591 A